# EUROPEAN PATENT APPLICATION

(11) **EP 4 776 693 A1**
(43) Date of publication of application: **15.07.2026**
(21) Application number: 23951217.1
(22) Date of filing: 08.09.2023
(51) Int. Cl.: H04W 36/18

(54) **WIRELESS COMMUNICATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Taor, Simon Edward William
(86) International application number: PCT/CN2023/117817
(87) International publication number: WO 2025/050398

(57) **Abstract**

A method and apparatus for wireless communication, a device, and a storage medium are provided, relating to the field of communication technology. The method includes the following. A first timer is started and/or first prompt information is sent based on a first event, where the first event is related to communication quality of the terminal device (710). The terminal device determines, based on the event related to the communication quality of the terminal device, whether to start the first timer and/or send the first prompt information. In the case where the communication quality of the terminal device is relatively poor or communication interruption occurs, the terminal device can alert a user to improve the communication quality of the terminal device via the first prompt information within a valid duration of the first timer, which improves the robustness of signal transmission, thereby improving the communication quality of wireless signals and enabling rapid recovery of wireless communication.

## Description

### TECHNICAL FIELD

This disclosure relates to the field of communication technology, in particular to a method and apparatus for wireless communication, a device, and a storage medium.

### BACKGROUND

During wireless signal transmission, interference from obstacles can lead to large penetration loss and significant signal attenuation, resulting in poor quality of signals received by a terminal device. This will degrade communication quality or even cause communication interruption. For example, when a terminal device is in a backpack or a pocket, signal transmission is obstructed, resulting in poor communication quality.

Further discussion and research are needed on how to improve the quality of wireless communication.

### SUMMARY

A method and apparatus for wireless communication, a device, and a storage medium are provided in embodiments of the present disclosure. The technical solutions are as follows.

According to an aspect of embodiments of the present disclosure, a method for wireless communication is provided. The method is performed by a terminal device, and the method includes the following. A first timer is started and/or first prompt information is sent based on a first event, where the first event is related to communication quality of the terminal device.

According to an aspect of embodiments of the present disclosure, a method for wireless communication is provided. The method is performed by a network device, and the method includes the following. First configuration information is sent to a terminal device, where the first configuration information is used for configuring the terminal device to start a first timer and/or send first prompt information based on a first event, and the first event is related to communication quality of the terminal device.

According to an aspect of embodiments of the present disclosure, an apparatus for wireless communication is provided. The apparatus is disposed in a terminal device, and the apparatus includes a processing module. The processing module is configured to start a first timer and/or send first prompt information based on a first event, where the first event is related to communication quality of the terminal device.

According to an aspect of embodiments of the present disclosure, an apparatus for wireless communication is provided. The apparatus is disposed in a network device, and the apparatus includes a sending module. The sending module is configured to send first configuration information to a terminal device, where the first configuration information is used for configuring the terminal device to start a first timer and/or send first prompt information based on a first event, and the first event is related to communication quality of the terminal device.

According to an aspect of embodiments of the present disclosure, a communication device is provided. The communication device includes a processor and a memory. The memory is configured to store a computer program. The processor is configured to execute the computer program to implement the method for wireless communication performed by the terminal device or to implement the method for wireless communication performed by the network device. The communication device is a terminal device or a network device.

According to an aspect of embodiments of the present disclosure, a computer-readable storage medium is provided. The computer-readable storage medium is configured to store a computer program which, when executed by a processor, causes the processor to implement the method for wireless communication performed by the terminal device or to implement the method for wireless communication performed by the network device.

According to an aspect of embodiments of the present disclosure, a chip is provided. The chip includes programmable logic circuits and/or program indications which, when executed on the chip, cause the chip to implement the method for wireless communication performed by the terminal device or to implement the method for wireless communication performed by the network device.

According to an aspect of embodiments of the present disclosure, a computer program product is provided. The computer program product includes computer instructions that are stored in a computer-readable storage medium, and a processor is configured to read the computer instructions stored in the computer-readable storage medium and execute the computer instructions to implement the method for wireless communication performed by the terminal device or to implement the method for wireless communication performed by the network device.

The technical solutions provided in embodiments of the present disclosure may have the following beneficial effects. The terminal device determines, based on the event related to the communication quality of the terminal device, whether to start the first timer and/or send the first prompt information. In the case where the communication quality of the terminal device is relatively poor or communication interruption occurs, the terminal device can alert a user to improve the communication quality of the terminal device via the first prompt information within a valid duration of the first timer. For example, the terminal device prompts the user to move the terminal device to an open area or to assist in adjusting a position or an antenna angle of the terminal device, which improves the robustness of signal transmission, thereby improving the communication quality of wireless signals and enabling rapid recovery of wireless communication.

### BRIEF DESCRIPTION OF THE DRAWINGS

FIG. 1 is a schematic diagram of an architecture of a communication system provided in embodiments of the present disclosure.
FIG. 2 is a schematic diagram of an architecture of another communication system provided in embodiments of the present disclosure.
FIG. 3 is a schematic diagram of an architecture of another communication system provided in embodiments of the present disclosure.
FIG. 4 is a schematic diagram of an architecture of another communication system provided in embodiments of the present disclosure.
FIG. 5 is a schematic diagram of an architecture of another communication system provided in embodiments of the present disclosure.
FIG. 6 is a schematic diagram of an architecture of another communication system provided in embodiments of the present disclosure.
FIG. 7 is a flowchart of a method for wireless communication provided in an embodiment of the present disclosure.
FIG. 8 is a flowchart of a method for wireless communication provided in another embodiment of the present disclosure.
FIG. 9 is a block diagram of an apparatus for wireless communication provided in an embodiment of the present disclosure.
FIG. 10 is a block diagram of an apparatus for wireless communication provided in another embodiment of the present disclosure.
FIG. 11 is a schematic structural diagram of a terminal device provided in an embodiment of the present disclosure.
FIG. 12 is a schematic structural diagram of a network device provided in an embodiment of the present disclosure.

### DETAILED DESCRIPTION

In order to make the objectives, technical solutions, and advantages of the present disclosure clearer, embodiments of the present disclosure will be further elaborated below with reference to accompanying drawings.

The network architectures and service scenarios illustrated in embodiments of the present disclosure are intended to describe the technical solutions of embodiments of the present disclosure more clearly, and do not constitute any limitation on the technical solutions provided in embodiments of the present disclosure. Those of ordinary skill in the art can appreciate that, with evolution of network architectures and emergence of new service scenarios, for similar technical problems, the technical solutions provided in embodiments of the present disclosure are also applicable.

The technical solutions of embodiments of the present disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, a 6th-generation (6G) communication systems, other communication systems, etc.

Generally speaking, a conventional communication system generally supports a limited number (quantity) of connections and thus is easy to implement. However, with the development of communication technology, a mobile communication system will not only support conventional communication but also support, for example, device-to-device (D2D) communication, machine-to-machine (M2M) communication, machine-type communication (MTC), vehicle-to-vehicle (V2V) communication, or vehicle-to-everything (V2X) communication, etc. Embodiments of the present disclosure can also be applied to these communication systems.

The communication system in embodiments of the present disclosure is applicable to a carrier aggregation (CA) scenario, or may be applied to a dual connectivity (DC) scenario, or may be applied to a standalone (SA) scenario.

The communication system in embodiments of the present disclosure is applicable to an unlicensed spectrum, and the unlicensed spectrum may be regarded as a shared spectrum. Alternatively, the communication system in embodiments of the present disclosure is applicable to a licensed spectrum, and the licensed spectrum may be regarded as a non-shared spectrum.

Communication system scenarios include an NTN system and a terrestrial network (TN) system. NTN typically provides communication services to terrestrial users by means of satellite communication. Currently, the NTN system includes an NR-NTN system and an IoT-NTN system, and other NTN systems may be included in the future.

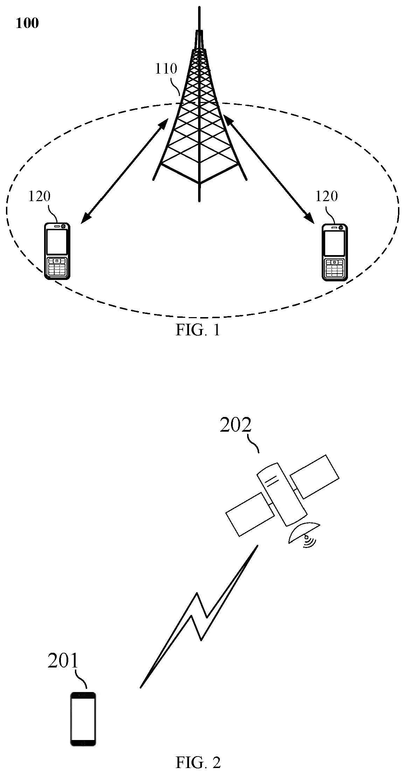

Exemplarily, FIG. 1 is a schematic diagram of an architecture of a communication system provided in embodiments of the present disclosure. As illustrated in FIG. 1, the communication system 100 may include a network device 110, and the network device 110 may be a device that can communicate with a terminal device 120. The network device 110 can provide a communication coverage for a specific geographical area and communicate with terminal devices in the coverage area.

FIG. 1 exemplarily illustrates one network device 110 and two terminal devices 120. In some embodiments of the present disclosure, the communication system 100 may include multiple network devices, and there may be other numbers (quantities) of terminal devices in a coverage area of each of the multiple network devices, which is not limited in embodiments of the present disclosure.

Exemplarily, FIG. 2 is a schematic diagram of an architecture of another communication system provided in embodiments of the present disclosure. As illustrated in FIG. 2, the communication system may include a terminal device 201 and a satellite 202. A wireless communication can be performed between the terminal device 201 and the satellite 202. A network formed between the terminal device 201 and the satellite 202 may also be referred to as an NTN. In the architecture of the communication system as illustrated in FIG. 2, the satellite 202 may have a base station function, and the terminal device 201 and the satellite 202 may communicate with each other directly. In such an architecture, the satellite 202 may be referred to as a network device. In some embodiments of the present disclosure, the communication system may include multiple satellites 202, and there may be other numbers of terminal devices in a coverage area of each satellite 202, which is not limited in embodiments of the present disclosure.

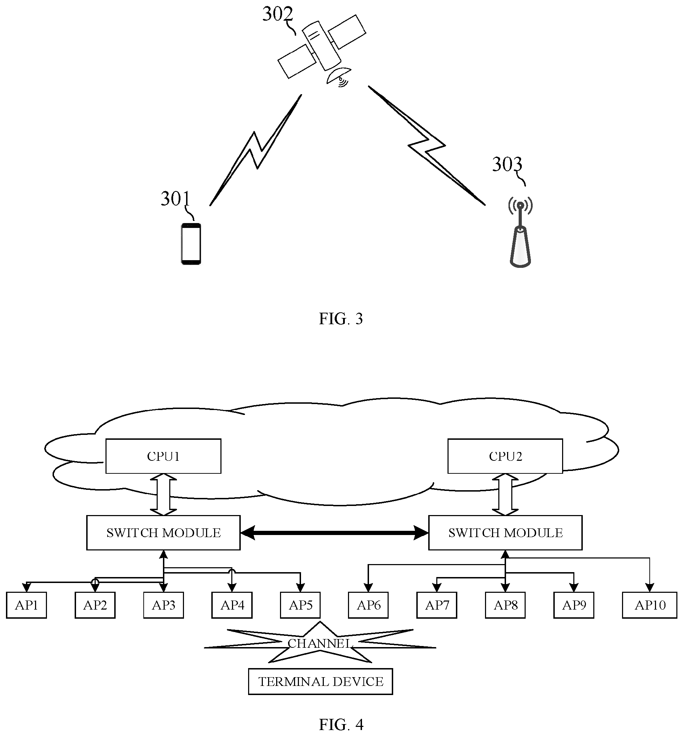

FIG. 3 is a schematic diagram of an architecture of another communication system provided in embodiments of the present disclosure. As illustrated in FIG. 3, the communication system includes a terminal device 301, a satellite 302, and a base station 303. A wireless communication can be performed between the terminal device 301 and the satellite 302, and a communication may be performed between the satellite 302 and the base station 303. A network formed among the terminal device 301, the satellite 302, and the base station 303 may also be referred to as an NTN. In the architecture of the communication system as illustrated in FIG. 3, the satellite 302 may not have a base station function, and communication between the terminal device 301 and the base station 303 is required to be relayed via the satellite 302. In such an architecture, the base station 303 may be referred to as a network device. In some embodiments of the present disclosure, the communication system may include multiple base stations 303, each base station 303 can communicate with one or more satellites 302, and there may be other numbers of terminal devices in a coverage area of each satellite 302, which is not limited in embodiments of the present disclosure.

A future evolved communication system, such as beyond 5G (B5G) or 6G, may also include distributed multiple-input multiple-output (MIMO) (also referred to as "distributed antenna system") scenarios and/or massive MIMO (also referred to as "massive antenna matrix system") scenarios. In some cases, distributed MIMO and/or massive MIMO may support cell-free scenarios or UE-centric scenarios. It may be understood that, the scenarios are also applicable to TN and/or NTN.

Exemplarily, FIG. 4 is a schematic diagram of an architecture of another communication system provided in embodiments of the present disclosure. The architecture of the communication system includes a distributed antenna port(s) (or a distributed antenna port cluster(s)), a central processing unit(s) (CPU), and/or a switch module(s). As illustrated in FIG. 4, the communication system may include multiple distributed antenna ports (or distributed antenna port clusters), and each distributed antenna port (or distributed antenna port cluster) is coupled with a CPU via a switch module. A terminal device selects, according to a geographical region of the terminal device, a suitable distributed antenna port (or distributed antenna port cluster) to serve the terminal device. FIG. 4 exemplarily illustrates two CPUs, two switch modules, ten distributed antenna ports (denoted as AP1-AP10), and one terminal device. In some embodiments of the present disclosure, the communication system may include a different number of CPUs, and/or a different number of switch modules, and/or a different number of distributed antenna ports (or distributed antenna port clusters), and/or a different number of terminal devices, which are not limited in embodiments of the present disclosure.

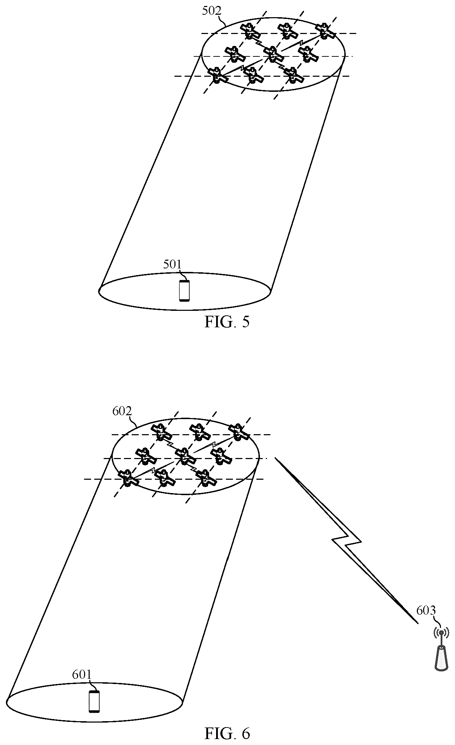

Exemplarily, FIG. 5 is a schematic diagram of an architecture of another communication system provided in embodiments of the present disclosure. As illustrated in FIG. 5, the communication system includes a terminal device 501 and a satellite cluster 502, and wireless communication can be performed between the terminal device 501 and the satellite cluster 502. A network formed between the terminal device 501 and the satellite cluster 502 may also be referred to as an NTN. In the architecture of the communication system as illustrated in FIG. 5, at least one satellite (e.g., a central satellite) in the satellite cluster 502 may have a base station function, and the terminal device 501 and the satellite cluster 502 can communicate with each other directly. In such an architecture, the satellite with base station function may be referred to as a network device. In some embodiments of the present disclosure, the communication system may include multiple satellite clusters, and/or each satellite cluster includes one or more network devices, and/or there may be other numbers of terminal devices in a coverage area of each satellite cluster or each network device, which are not limited in embodiments of the present disclosure.

Exemplarily, FIG. 6 is a schematic diagram of an architecture of another communication system provided in embodiments of the present disclosure. As illustrated in FIG. 6, the communication system includes a terminal device 601, a satellite cluster 602, and a base station 603. Wireless communication can be performed between the terminal device 601 and the satellite cluster 602, and communication can be performed between the satellite cluster 602 and the base station 603. A network formed between the terminal device 601, the satellite cluster 602, and the base station 603 may also be referred to as an NTN. In the architecture of the communication system as illustrated in FIG. 6, the satellite cluster 602 may not have a base station function, and communication between the terminal device 601 and the base station 603 is required to be relayed via the satellite cluster 602. In such an architecture, the base station may be referred to as a network device. In some embodiments of the present disclosure, the communication system may include multiple satellite clusters and/or multiple network devices, and/or one network device is associated with one or more satellite clusters, and/or there may be other numbers of terminal devices in a coverage area of each network device, which are not limited in embodiments of the present disclosure.

The terminal device in embodiments of the present disclosure may also be referred to as a user equipment (UE), an access terminal, a subscriber unit, a subscriber station, a mobile station (MS), a remote station, a remote terminal, a mobile device, a wireless communication network element, a user agent, a user device, etc. Optionally, the terminal device 10 may also be a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a 5G system (5GS), a terminal device in a future evolved public land mobile network (PLMN), etc., which is not limited in embodiments of the present disclosure. For ease of illustration, in embodiments of the present disclosure, the devices mentioned above are collectively referred to as the terminal device. In embodiments of the present disclosure, "terminal device" and "UE" are usually used interchangeably, but those skilled in the art can understand that "terminal device" and "UE" have the same meaning.

The network device mentioned in embodiments of the present disclosure can be an access network (AN) device that may be located on the ground or on a satellite. The AN device is a device deployed in an AN to provide wireless communication functions for the terminal device. The AN device may include macro base stations, micro base stations, relay stations, access points, etc., in various forms. In systems adopting different radio access technologies, a device with base station function may have different names. For example, in a 5G NR system, the device is referred to as gNodeB or gNB. The name "AN device" may change with evolution of communication technologies. For ease of illustration, in embodiments of the present disclosure, an apparatus that provides wireless communication functions for the terminal device is collectively referred to as "AN device". Optionally, a communication relationship can be established between a terminal device and a core network (CN) device via an AN device.

The "5G NR system" in embodiments of the present disclosure may also be referred to as a 5G system or an NR system, but the meaning thereof may be understood by those skilled in the art. The technical solutions mentioned in embodiments of the present disclosure are applicable to an LTE system, a 5G NR system, and a future evolved system (such as a 6G system) of a 5G NR system, or other communication systems such as a narrow band internet of things (NB-IoT) system, which is not limited in the present disclosure.

In embodiments of the present disclosure, the network device serves a cell, and the terminal device communicates with the network device on a transmission resource (e.g., a frequency-domain resource or a spectrum resource) for the cell. The cell may be a cell corresponding to the network device (e.g., a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

Before introducing the technical solutions of the present disclosure, some related technical knowledge involved in the present disclosure will be elaborated. The following related art, as an optional scheme, can be arbitrarily combined with the technical solutions of embodiments of the present disclosure, which shall all belong to the protection scope of embodiments of the present disclosure. Embodiments of the present disclosure include at least some of the following.

### I. Initial Access Process in NR System

In NR system, an initial access process of a terminal device may be completed by detecting a synchronization signal/PBCH block (SSB or SS/PBCH block) on a sync raster. The SSB is transmitted via either a discovery burst transmission window or an SSB transmission window. The discovery burst transmission window or the SSB transmission window occurs periodically, and the period may be configured by a network device via a higher-layer parameter.

An SSB index is mainly used to enable the terminal device to obtain system timing information. In addition, the SSB index is further used to indicate a quasi-co-location (QCL) relationship between SSBs. QCL means that a large-scale parameter of a channel experienced by a symbol on a certain antenna port can be inferred from a channel experienced by a symbol on another antenna port. The large-scale parameter may include delay spread, average delay, Doppler spread, Doppler shift, and a spatial receiving parameter. Specifically, for SSB, in a 5G NR system, SSBs carried by different beams may form one SSB burst set, and a different SSB index corresponds to time-domain position information of a different SSB in the SSB burst set and corresponds to transmission beam information of a specific SSB. SSBs with the same SSB index may be considered to have a QCL relationship with each other, or SSBs with the same SSB index may experience the same or similar large-scale parameter of the channel. The terminal device may assume that the network device uses one beam to transmit the SSBs. Since SSBs corresponding to different SSB indexes may be transmitted by the network device using different transmission beams and experience different channel transmission characteristics, the SSBs may not be considered to have a QCL relationship with each other.

In the initial access process, the terminal device attempts to search for a synchronization signal based on a predefined possible time-frequency position(s) of an SSB, and demodulates a PBCH in the SSB upon detecting a synchronization signal. The terminal device performs combined detection on synchronization signals or PBCHs that have a QCL relationship across multiple periods, to improve the robustness of SSB detection. Upon detecting an SSB, the terminal device can obtain time and frequency synchronization, radio frame timing, and a cell identifier (ID). The network device can configure a type0-physical downlink control channel common search space (Type0-PDCCH CSS) set based on a master information block (MIB) information in an SSB, where a PDCCH transmitted in the Type0-PDCCH CSS set is used for scheduling a physical downlink shared channel (PDSCH) carrying system information block 1 (SIB1). The terminal device may receive scheduling of a corresponding SIB1 message by monitoring PDCCH candidates at a corresponding monitoring occasion(s) of the Type0-PDCCH CSS set. Similarly, the terminal device may receive an SIB1 message through combination.

### II. Radio Link Monitoring (RLM) Process in NR System

In NR, an RLM reference signal (RLM-RS, a reference signal for RLM) is configured by higher-layer signaling *RadioLinkMonitoringRS*. Configurable RLM-RS includes two types: channel state information-reference signal (CSI-RS) and SSB. Configuration of an RLM-RS includes either a CSI-RS resource index or an SSB index. A measurement result of an RLM-RS is used for evaluating a hypothetical PDCCH block error rate (BLER). The network device may configure multiple RLM-RSs on each bandwidth part (BWP) for the terminal device. Among configured multiple RLM-RSs, the terminal device assumes that each RLM-RS shares the same antenna port as its corresponding evaluated hypothetical PDCCH.

For SSB, the network device configures one or more SSB indexes as RLM-RSs for the terminal device. Due to multi-beam transmission in the NR, when configuring RLM-RSs, the network device needs to configure multiple corresponding SSBs as RLM-RSs according to beams serving the terminal device over a period of time. As such, the terminal device determines an in-synchronization (IS)/out-of-synchronization (OSS) status by performing measurement according to the signal quality of the SSBs.

For CSI-RS, since a CSI-RS resource is UE-specific, the network device can more flexibly configure an RLM-RS resource(s) for a certain terminal device. The network device may also configure one or more CSI-RS resource indexes as RLM-RSs for the terminal device, and may also support measurement of channel quality for multi-beam transmission.

When a serving cell of the terminal device is configured with multiple downlink BWPs, the terminal device can perform RLM measurement only on an activated BWP by using an RLM-RS configured on the activated BWP; or when no RLM-RS is configured on the activated BWP, the terminal device can perform RLM measurement by using a CSI-RS corresponding to an activated transmission configuration indicator (TCI) state of a control-resource set (CORESET) used for PDCCH reception on the activated BWP as an RLM-RS.

After RLM-RSs are configured, UE can measure each RLM-RS and obtain an IS/OOS status of a radio link by comparing each measurement result with IS/OOS thresholds, and then periodically report an evaluated result of the IS/OOS status to a higher layer. If a measurement result of any one of all the configured RLM-RSs is greater than an IS threshold, a physical layer (PHY) reports an IS status to the higher layer. If measurement results of all the configured RLM-RSs are less than an OOS threshold, the PHY reports an OOS status to the higher layer. It can be seen that, the reporting of the IS/OOS status is not based on the number of beams within the cell, i.e., the number of configured RLM-RSs.

In a non-discontinuous reception (DRX) state, a reporting period for the IS/OOS status is a maximum value between the shortest period among all configured RLM-RS resource periods and 10 ms. In a DRX state, the reporting period for the IS/OOS status is a maximum value between the shortest period among all configured RLM-RS resource periods and a DRX cycle.

In NR RLM, IS/OOS thresholds are determined according to a hypothetical PDCCH BLER. Two sets of hypothetical PDCCH BLER are supported in the NR. The first set of thresholds is consistent with that in LTE, where the IS threshold corresponds to a hypothetical PDCCH BLER of 2%, and the OOS threshold corresponds to a hypothetical PDCCH BLER of 10%. The second set of thresholds is introduced for a higher hypothetical PDCCH BLER, such that a radio link connection can be maintained even in a position with poor wireless signals, which can avoid triggering radio link failure (RLF) and subsequent connection drops, thereby facilitating the continuity of services such as voice over internet protocol (VoIP). A set of hypothetical PDCCH BLER to be used is configured by the network via signaling *rlmInSyncOutOfSyncThreshold*. Signal-to-interference-plus-noise ratio (SINR) values corresponding to the IS/OOS BLER thresholds are not explicitly defined in the NR standards. Each manufacturer determines its own UE-specific IS/OOS thresholds based on the hypothetical PDCCH BLER and the performance of a UE receiver.

The PHY reports an IS/OOS indication to the higher layer each time. If the higher layer receives *N*310 consecutive OOS indications, an RLM timer is started, indicating that a PHY issue is detected. During running of the RLM timer, if the higher layer receives *N*311 consecutive IS indications, the RLM timer is stopped, indicating that the PHY issue is addressed. *N*310 and *N*311 each are a configured time. If the RLM timer expires, it indicates that an RLF event has occurred.

When an RLF event occurs, the terminal device may declare RLF. The terminal device may declare RLF for various reasons, for example, RLM expires, master cell group medium access control (MCG MAC) indicates a random access issue (e.g., a random access issue triggered by beam failure recovery (BFR) or other reasons), MCG radio link control (RLC) reaches the maximum number of retransmissions, uplink listen before talk (LBT) failure persists, etc.

In a multi-radio dual connectivity (MR-DC) enhancement project, a fast MCG recovery function was introduced to reduce service interruption caused by RLF. When RLF occurs on an MCG, an indication is sent to the network via a secondary cell group (SCG) link, triggering rapid recovery of an MCG link by the network side.

### III. Radio Resource Management (RRM) Measurement in NR System

For a wireless mobile communication system, accurate measurement of cell quality and beam quality is a foundation for the system to effectively perform RRM management and mobility management. In 5G NR, two primary types of reference signals are currently considered to be measurement reference signals, namely, SSB and CSI-RS. For SSB-based measurement, the network device configures SSB measurement resources for the UE via higher-layer signaling, enabling the UE to perform corresponding measurement operations. For CSI-RS-based measurement, the network device can configure one or more CSI-RS resources for the UE via higher-layer signaling for measurement.

In the design of a CSI-RS-based measurement scheme, special configuration information has been introduced, i.e., information indication of an SSB associated with a CSI-RS. When this parameter field is configured, the UE needs to first detect the SSB associated with the CSI-RS, determine a target cell based on the SSB, determine a position of a target CSI-RS resource based on timing information of the target cell, and finally measure the target CSI-RS to obtain a corresponding measurement result. In addition, if the UE fails to detect an SSB associated with a certain CSI-RS resource, the CSI-RS resource will no longer be measured, thereby reducing the complexity of the CSI-RS-based measurement to some extent. If an information indicator field for an associated SSB is not configured, it means that the UE can directly determine a position of a CSI-RS resource by utilizing the timing of a reference serving cell (*refServCellIndex*) indicated in the measurement configuration, and then directly measure the CSI-RS resource without performing additional detection of a synchronization signal for a target cell.

With the above configuration parameters, the UE can perform corresponding measurement operations on an appropriate reference signal within an appropriate time-domain resource and an appropriate frequency-domain resource. For intra-frequency or inter-frequency measurements, the terminal device needs to obtain sufficient reference signal samples within a unit measurement time to meet certain measurement accuracy requirements (e.g., measurement accuracy of reference signal received power (RSRP), reference signal received quality (RSRQ), and SINR), and then reports an evaluated measurement result to the network.

In conditional handover, the network device pre-configures candidate target cells and corresponding handover command information for the terminal device in advance. Upon a specific condition being satisfied, the terminal device can autonomously implement configuration in the handover command and directly initiate handover access to a target cell that satisfies the condition. The terminal device no longer triggers measurement reporting upon the handover condition being satisfied, the terminal device has already obtained the configuration in the handover command in advance, and therefore, a possibility that measurement reporting or the handover command may not be received correctly can be avoided in the handover process, thereby improving the handover success rate.

In the MR-DC enhancement project, to improve service performance in an MR-DC mode, rapid establishment of a secondary cell (SCell)/SCG has been introduced. In other words, the terminal device is allowed to perform measurement in an idle state or in an inactive state, and immediately report a measurement result to the network side upon entering a radio resource control (RRC) connected state, such that the network side can quickly configure and establish SCell/SCG.

In an SCell dormancy project, when an SCell/SCG is activated but there is no data transmission, a dedicated dormant BWP is configured via RRC. That is, on the dormant BWP, the UE does not perform PDCCH monitoring but performs CSI measurement and reporting, thereby saving power for the UE. When data transmission is required, a dynamic indication can be used for quickly switching the UE to an active state for rapid service resumption.

### IV. Beam Failure Recovery (BFR) Mechanism in NR system

In NR system, analog beamforming technology operates by using a phase shifter to alter a phase of a channel corresponding to each antenna, such that a set of antennas can form beams in different directions, thereby achieving cell coverage through beam sweeping, i.e., covering different areas of the cell by utilizing beams in different directions at different times.

To improve the robustness of high-frequency analog beam transmission, when the quality of current beam transmission deteriorates to a certain extent, the terminal device autonomously searches for a new beam with better link quality and notifies the network, thereby re-establishing a high-quality and reliable communication link via the new beam. This processing is referred to as "BFR mechanism" or "beam recovery mechanism" for short.

The BFR procedure is designed for downlink transmission beam and does not address an issue of an obstructed uplink transmission beam. The primary reason is that if the quality of a downlink link is relatively good, the network may enable, through an indication, the terminal device to switch to a better uplink transmission beam for transmission; and if the quality of the downlink link is poor, the terminal device may be unable to receive an indication from the network, making it impossible for the network to effectively communicate with the terminal device to determine a new beam pair.

In NR system, the BFR mechanism mainly includes the following four steps.

### Beam Failure Detection (BFD)

Beam failure measurement and determination are based on link quality of a PDCCH, that is, a hypothetical PDCCH BLER is used as a metric for BFD. Since a true BLER of PDCCH transmission cannot be obtained directly, the terminal device derives a corresponding possible BLER from a measured SINR, which is thus referred to as "hypothetical PDCCH BLER".

Only single-port periodic CSI-RS can be used for BFD. Specifically, the network device may explicitly configure a periodic CSI-RS for BFD via signaling. Alternatively, if no explicit configuration is provided by the network device, the terminal device performs BFD by using a periodic CSI-RS in an activated TCI state of a CORESET corresponding to a PDCCH.

The PHY detects a hypothetical BLER of a beam corresponding to a PDCCH. If hypothetical BLERs of all beams corresponding to the PDCCH are less than a specified threshold, one beam failure instance (BFI) is recorded, and the PHY reports the occurrence of one BFI to the MAC layer. The PHY is required to report periodically to the MAC layer. If no report is made, it is assumed that no BFI occurs.

The MAC layer maintains a related BFD timer (*beamFailureDetectionTimer*) and a related beam failure counter (*BFI_COUNTER*). To ensure the reliability of beam failure detection, the MAC layer starts or restarts the BFD timer as long as the MAC layer receives one BFI report, and the beam failure counter increments by 1. If the BFD timer expires, the terminal device resets the counter to 0, thereby ensuring that beam failure determination is based on consecutive BFI reports. If the beam failure counter reaches a specified maximum value during running of the BFD timer, the terminal device considers that a beam failure has occurred.

### New Beam Identification (NBI)

The terminal device measures a set of candidate beams, from which the terminal device identifies a beam that meets a certain threshold as a new beam.

### Beam Failure Recovery ReQuest (BFRQ)

For a primary cell (PCell) and a primary secondary cell (PSCell):

The terminal device initiates a BFRQ procedure via a physical random access channel (PRACH) to notify the network device of a beam failure and report a new beam.

Upon occurrence of beam failure, the terminal device triggers a random access procedure, and informs, via message 1 (MSG1) for random access, the network device of the occurrence of beam failure and information of the new beam selected by the terminal device. Specifically, the network device pre-configures a set of candidate beams (e.g., CSI-RSs and/or SSBs) for the terminal device and configures a corresponding PRACH resource and a random access preamble for each SSB/CSI-RS. As such, when the terminal device determines a specific beam as the new beam, the terminal device sends a corresponding random access preamble by using a PRACH resource corresponding to the new beam. Upon receiving the random access preamble, the network device knows that beam failure has occurred. The network device can determine the new beam selected by the terminal device based on the received PRACH information and send a random access response via the new beam.

If the network device does not configure a reference signal for NBI and a corresponding PRACH resource, i.e., the terminal has no candidate beams to measure or L1-RSRP measurement values corresponding to all candidate beams are less than a threshold configured by the network device, the terminal device may re-establish connection with the network device by initiating an existing contention-based random access procedure according to a measurement result of SSB signal quality in the cell. Additionally, to further enhance the BFR mechanism in this case, the terminal device may carry an MAC control element (MAC CE) dedicated to BFR information in Msg3 or MsgA for contention-based random access, to indicate to the network device that the random access procedure is triggered by beam failure. Meanwhile, a new beam selected by the UE may also be carried in a BFR MAC CE.

### For SCell:

When beam failure occurs in an SCell and currently available uplink resources are sufficient for the transmission of a BFR MAC CE, the terminal device may report beam failure information of the SCell via the BFR MAC CE, where the beam failure information contains an SCell ID and new beam indication information.

If there are insufficient uplink resources available for sending a BFR MAC CE, the terminal device may request uplink resources by sending selective repeat (SR) to send the BFR MAC CE.

If the terminal device neither has available uplink resources to send a BFR MAC CE nor is provided with an SR configuration by the network device, the terminal device may obtain uplink resources by triggering a random access procedure based on a behavior defined in the Rel-15.

If no beam that meets a threshold configured for the system is selected in a new beam selection process in an SCell, the terminal device reports an ID of the SCell and a special state to indicate that no new beam meeting the threshold is selected from candidate beams configured by the network device for the SCell.

When respective BFR procedures are performed in multiple SCells, beam failure may occur in all the multiple SCells. In this case, beam failure information of the SCells can be reported collectively via a BFR MAC CE, thereby saving resource overhead and reducing latency. If beam failure occurs in all the multiple SCells but beam failure information of all the SCells cannot be transmitted on currently available uplink resources, IDs of the SCells experiencing beam failure can be reported to the network device by truncating the BFR MAC CE. Upon receiving the truncated MAC CE, the network device can know which cells have experienced beam failure, and also know that the UE lacks sufficient uplink resources to report beam failure information. Consequently, the network device can allocate uplink resources to the terminal device.

BFR MAC CE reporting may be transmitted via a physical downlink control channel (PUSCH) in a PCell or via a PUSCH in an SCell.

### Network Device Response

### For PCell and PSCell:

Upon the network device receives BFRQ information sent by the terminal device, the network device knows that the terminal device has experienced beam failure, and the network device selects to send a PDCCH via a new beam. If the terminal device receives the PDCCH sent by the network device on the new beam, it is considered that the terminal device has correctly received response information from the network device.

To monitor the response of the network device to the BFRQ, i.e., a random access response, the terminal device will start *ra-ResponseWindow* at the first PDCCH occasion upon sending MSG1 and start to perform PDCCH monitoring.

If DCI sent to the terminal device by the network device is monitored by the terminal device on the new beam within *ra-ResponseWindow*, it is considered that beam recovery is successful.

If the DCI sent to the terminal device by the network device is not monitored by the terminal device on the new beam within *ra-ResponseWindow*, the terminal device can retransmit a BFRQ. This process can be repeated until beam recovery is successful, or until the number of BFRQ retransmissions exceeds a threshold configured by the network device.

### For SCell:

Whether MAC CE signalling is correctly received by the network device can be determined according to an existing PUSCH hybrid automatic repeat request (HARQ)-related mechanism. If the terminal device receives an uplink grant for scheduling new data corresponding to the same HARQ process, it is considered that a previous transmission has been correctly received by the network device.

In NTN system, satellite wireless communication primarily relies on direct signal propagation. A higher satellite orbital altitude leads to greater signal attenuation. If the terminal device communicating with the satellite is in an obstructed environment, for example, inside a backpack or a pocket, due to obstructed signal transmission, penetration loss is significant, resulting in poor communication quality and even communication interruption. In scenarios with poor communication quality, how to improve the robustness of signal transmission remains unclear.

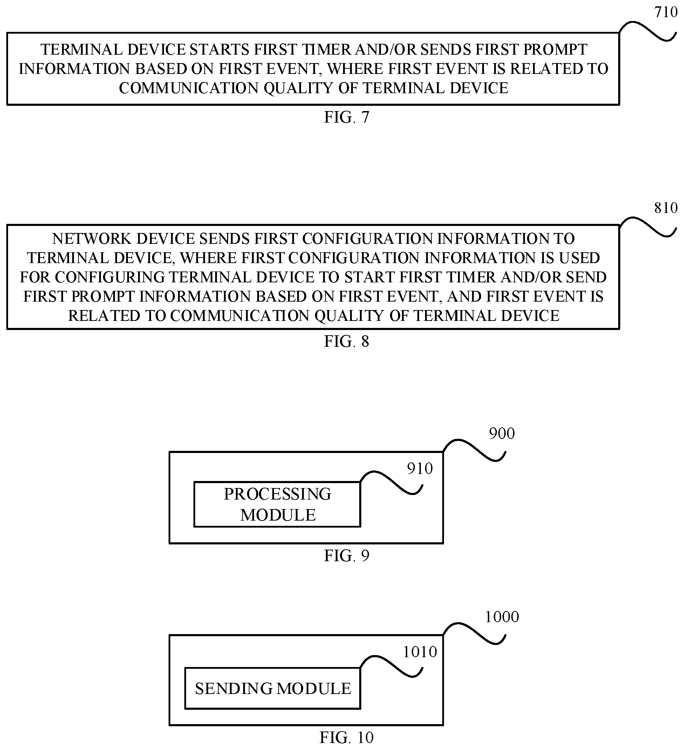

FIG. 7 illustrates a flowchart of a method for wireless communication provided in an embodiment of the present disclosure. The method is performed by a terminal device. The method may include operations at S710.

At S710, the terminal device starts a first timer and/or sends first prompt information based on a first event, where the first event is related to communication quality of the terminal device.

In some embodiments, the terminal device starts the first timer based on the first event.

In some embodiments, the terminal device sends the first prompt information based on the first event.

In some embodiments, the terminal device starts the first timer and sends the first prompt information based on the first event.

In some embodiments, if the first event occurs, it indicates that the communication quality of the terminal device is relatively poor. The terminal device starts the first timer and/or sends the first prompt information based on the occurrence of the first event.

In some embodiments, the terminal device starts the first timer based on the first event, and sends the first prompt information within a valid duration of the first timer.

In some embodiments, the terminal device sends the first prompt information as follows. The terminal device sends the first prompt information to a higher layer. For example, a PHY of the terminal device sends the first prompt information to a higher layer of the terminal device based on the first event.

In some embodiments, the terminal device sends the first prompt information as follows. The terminal device sends the first prompt information to a network device. For example, the terminal device sends the first prompt information to the network device via an MAC CE or RRC based on the first event.

In some embodiments, the first prompt information is used for alerting a user to improve the communication quality of the terminal device. A form of the first prompt information is not limited in the present disclosure. Optionally, the first prompt information may be indication information. Exemplarily, the first prompt information may be an MAC CE or RRC. Optionally, the first prompt information may be application-layer information. Exemplarily, the first prompt information may be one or more of a ringtone, vibration, and a text prompt. For example, the first prompt information may be in the form of a rington, or may be in the form of a rington and vibration.

In some embodiments, after the terminal device sends the first prompt information, the user moves the terminal device to an open area, or assists in adjusting a position or an antenna angle of the terminal device to improve the communication quality.

In some embodiments, the first event includes at least one of the following: a first measurement result corresponding to a first reference signal is less than a first threshold; RLF; beam failure; NBI; a BFRQ; conditional handover; the first reference signal is not received; a first PDCCH is not received; a PBCH is not received; a paging channel is not received; first indication information is received, where the first indication information is used for determining the first event; or the first indication information is not received.

In some embodiments, the terminal device starts the first timer and/or sends the first prompt information based on that the first measurement result corresponding to the first reference signal is less than the first threshold.

In some embodiments, the first reference signal may be a reference signal specifically used for evaluating the communication quality of the terminal device, or may be a reference signal with other functions.

In some embodiments, the first reference signal includes at least one of: an SSB, a CSI-RS, or a synchronization signal.

A CSI-RS is used for measuring downlink channel quality. The terminal device may determine the first measurement result according to a measurement result obtained by measuring downlink channel quality using a CSI-RS.

In some embodiments, the terminal device determines the first measurement result according to a channel quality indicator (CQI) measured using a CSI-RS. The terminal device may perform CSI reporting to enable the network device to perform link adaptive adjustment. Exemplarily, CQI measured using a CSI-RS is determined as the first measurement result.

An SSB is composed of a synchronization signal and a PBCH. A synchronization signal includes a primary synchronization signal (PSS) and a secondary synchronization signal (SSS). That is, a PSS, an SSS, a PBCH, and a demodulation reference signal (DMRS) are received in four consecutive orthogonal frequency division multiplexing (OFDM) symbols, respectively, and then formed into an SSB mainly used for downlink synchronization.

In some embodiments, the first measurement result is used to reflect signal quality of the first reference signal received by the terminal device.

In some embodiments, the terminal device obtains the first measurement result by performing signal quality measurement on the received first reference signal.

In some embodiments, a measurement metric corresponding to the first measurement result includes at least one of: a hypothetical PDCCH BLER, RSRP, RSRQ, or an SINR.

In some embodiments, if the measurement metric corresponding to the first measurement result is a hypothetical PDCCH BLER, the terminal device determines an SINR value according to the hypothetical PDCCH BLER and takes the SINR value as the first threshold. The terminal device obtains the first measurement result by measuring an SINR of the first reference signal.

The first threshold is used for measuring the communication quality of the terminal device. In some embodiments, if the first measurement result is less than the first threshold, it indicates that the signal quality of the first reference signal is relatively poor, that is, the communication quality of the terminal device is relatively poor.

In some embodiments, the first threshold is configured, predefined, or pre-configured by the network device, or is determined by the terminal device.

In some embodiments, if the first threshold is determined by the terminal device, the terminal device reports the first threshold to the network device upon determining the first threshold.

In some embodiments, the terminal device starts the first timer and/or sends the first prompt information based on the RLF.

In an RLM process, the PHY reports an IS/OOS indication to the higher layer each time. If the higher layer receives *N*310 consecutive OOS indications, an RLM timer is started, indicating that a PHY issue is detected. During running of the RLM timer, if the higher layer receives *N*311 consecutive IS indications, the RLM timer is stopped, indicating that the PHY issue is addressed. *N*310 and *N*311 are configured times. If the RLM timer expires, it indicates that an RLF event has occurred. The expiry of the RLM timer means that the higher layer does not receive *N*311 consecutive IS indications during the running of the RLM timer. IS/OOS thresholds are determined based on a hypothetical PDCCH BLEER, and the IS/OOS thresholds are SINR values. In other words, an IS indication indicates that the communication quality of the terminal device is relatively good, an OOS indication indicates that the communication quality of the terminal device is relatively poor, and the occurrence of the RLF event indicates that the communication quality of the terminal device has remained at a relatively poor level during the running of the RLM timer.

In some embodiments, upon occurrence of one or more events in a BFR mechanism, the terminal device starts the first timer and/or sends the first prompt information. The one or more events in the BFR mechanism include at least one of: beam failure, NBI, or a BFRQ.

In some embodiments, the terminal device starts the first timer and/or sends the first prompt information based on beam failure.

In some embodiments, beam failure includes at least one of the following: a measurement result of a CSI-RS by the terminal device during BFD is less than the first threshold; the terminal device reports one BFI during BFD; or the terminal device determines that beam failure has occurred during BFD.

In some embodiments, the terminal device starts the first timer and/or sends the first prompt information based on NBI.

In some embodiments, the NBI includes at least one of the following: measured values corresponding to all candidate beams during NBI are less than a threshold configured by the network; or the measured values corresponding to all candidate beams during NBI are less than the first threshold.

In some embodiments, the terminal device starts the first timer and/or sends the first prompt information based on a BFRQ.

In some embodiments, the BFRQ includes at least one of the following: a measurement result of SSB signal quality during BFRQ is less than the first threshold; or the terminal device resents a BFRQ during a network device response process.

In some embodiments, the terminal device starts the first timer and/or sends the first prompt information based on conditional handover.

During conditional handover, the network device pre-configures candidate target cells and handover command information for the terminal device. Upon a handover condition being satisfied, the terminal device can autonomously implement configuration in the handover command and directly initiate handover access to a target cell that satisfies the condition.

In some embodiments, if communication interruption occurs between the terminal device and the network device, the terminal device may be unable to receive a signal or a channel from the network device. Therefore, occurrence of one or more of the following conditions can also be considered as the occurrence of the first event: a first reference signal is not received; a PDCCH is not received; a PBCH is not received; a paging channel is not received; and first indication information is not received.

In some embodiments, the terminal device starts the first timer and/or sends the first prompt information based on that a first reference signal is not received.

In some embodiments, the terminal device starts the first timer and/or sends the first prompt information based on that a PDCCH is not received.

In some embodiments, the terminal device starts the first timer and/or sends the first prompt information based on that a PBCH is not received.

In some embodiments, the terminal device starts the first timer and/or sends the first prompt information based on that a paging channel is not received.

In some embodiments, the terminal device starts the first timer and/or sends the first prompt information based on that first indication information is not received, where the first indication information is used for determining the first event.

In some embodiments, the first indication information indicates the first event, or the first indication information is used for configuring the first event.

In some embodiments, the first indication information indicates the first event, which means that the first indication information indicates the occurrence of the first event. The terminal device starts the first timer and/or sends the first prompt information upon receiving the first indication information.

In some embodiments, the first indication information is used for configuring the first event, which means the first indication information is used for configuring the terminal device to start the first timer and/or send the first prompt information based on the first event. Exemplarily, the first indication information configures enabling of a first capability. For example, when the first indication information configures "alert on", the terminal device autonomously determines whether to start the first timer and/or send the first prompt information. Exemplarily, the first indication information configures disabling of the first capability. For example, when the first indication information configures "alert off", the terminal device does not start the first timer and/or does not send the first prompt information. Exemplarily, the first indication information is used for configuring which events are specifically included in the first event. For example, when the first indication information configures that the first event includes RLF, the terminal device starts the first timer and/or sends the first prompt information upon determination of RLF, upon determination of RLF and elapse of a first duration, or before RLF is determined. Optionally, when the first indication information is used for configuring which events are specifically included in the first event, for events not configured, the terminal device does not start the first timer and/or does not send the first prompt information, or the terminal device autonomously determines whether to start the first timer and/or send the first prompt information.

In some embodiments, if the network device does not send the first indication information or the first indication information does not configure the first event, the terminal device autonomously determines whether to start the first timer and/or send the first prompt information. Exemplarily, if the network device does not send the first indication information or the first indication information does not configure the first event, for example, the first indication information does not configure "alert on", the terminal device autonomously determines whether to start the first timer and/or send the first prompt information.

It can be noted that, in embodiments of the present disclosure, the first capability refers to the capability of the terminal device to start the first timer and/or send the first prompt information. First capability in other embodiments of the present disclosure has the same meaning as that in the embodiment, which will not be repeated in the present disclosure.

In some embodiments, there may be one or more first indication information. Exemplarily, one first indication information is used for configuring the first event, and another first indication information indicates the first event.

In some embodiments, the first indication information is carried in at least one of the following signaling: DCI, RRC signaling, a MAC CE, or system information.

In some embodiments, the first indication information is carried in at least one of the following signals or channels: a PDCCH, a PDSCH, a PBCH, an SSB, a CSI-RS, or a positioning reference signal (PRS).

In the technical solutions provided in embodiments of the present disclosure, the terminal device determines, based on the event related to the communication quality of the terminal device, whether to start the first timer and/or send the first prompt information. In the case where the communication quality of the terminal device is relatively poor or communication interruption occurs, the terminal device can alert the user to improve the communication quality of the terminal device via the first prompt information within the valid duration of the first timer. For example, the terminal device prompts the user to move the terminal device to an open area or to assist in adjusting the position or the antenna angle of the terminal device, which improves the robustness of signal transmission, thereby improving the communication quality of wireless signals and enabling rapid recovery of wireless communication.

In some embodiments, before the operations at S710, the method further includes operations at S720 (not illustrated in FIG. 7).

At S720, the terminal device receives first configuration information sent by the network device, where the first configuration information is used for configuring at least one of: the first timer, a start time of the first timer, a valid duration of the first timer, the first event, a first threshold, a first reference signal, a measurement metric corresponding to a first measurement result, or a first duration.

Correspondingly, the network device sends the first configuration information to the terminal device, where the first configuration information is used for configuring the terminal device to start the first timer and/or send the first prompt information based on the first event, and the first event is related to the communication quality of the terminal device.

In some embodiments, there may be one or more first configuration information.

In some embodiments, if there are multiple first configuration information, contents configured by the multiple first configuration information may be the same or different. For example, one first configuration information may be used for configuring the first timer, and another first configuration information may be used for configuring the first event. For another example, two first configuration information each may be used for configuring both the first timer and the first event.

In some embodiments, the first configuration information is carried in at least one of the following signaling: DCI, RRC signaling, an MAC CE, or system information.

In some embodiments, after the terminal device prompts the user to pay attention to the communication quality, the terminal device further needs to determine whether wireless communication is recovered. To address this need, two embodiments are provided in the present disclosure.

Method 1, the terminal device determines whether wireless communication is recovered upon expiry of the first timer.

In some embodiments, after the operations at S710, the method further includes operations at S730 (not illustrated in FIG. 7).

At S730, the terminal device starts a second timer upon the expiry of the first timer.

In some embodiments, before the operations at S730, the method further includes operations at S740 (not illustrated in FIG. 7).

At S740, the terminal device receives second configuration information sent by the network device, where the second configuration information is used for configuring at least one of: the second timer, a start time of the second timer, or a valid duration of the second timer.

In some embodiments, there may be one or more second configuration information.

In some embodiments, if there are multiple second configuration information, contents configured by the multiple second configuration information may be the same or different. For example, one second configuration information may be used for configuring the second timer, and another second configuration information may be used for configuring the start time of the second timer and the valid duration of the second timer. For another example, two second configuration information may both be used for configuring the second timer.

In some embodiments, the second configuration information is carried in at least one of the following signaling: DCI, RRC signaling, an MAC CE, or system information.

In some embodiments, the first configuration information and the second configuration information may be the same. In this case, the configuration information is used for configuring at least one of: a first timer, a start time of the first timer, a valid duration of the first timer, a first event, a first threshold, a first reference signal, a measurement metric corresponding to a first measurement result, a first duration, a second timer, a start time of the second timer, or a valid duration of the second timer.

In some embodiments, within the valid duration of the first timer, the terminal device does not perform at least one of: downlink reception, downlink measurement, or uplink transmission.

In some embodiments, within the valid duration of the second timer, the terminal device performs at least one of: downlink reception, downlink measurement, or uplink transmission.

It can be noted that, the operations at S740 may be performed before or after the operations at S710, which is not limited in the present disclosure. If the first configuration information and the second configuration information are the same, the terminal device receives the configuration information before the operations at S710.

Exemplarily, the network device configures a first threshold, a duration of a first timer, a duration of a second timer, and a first reference signal, where a measurement metric corresponding to a first measurement result is a hypothetical PDCCH BLER. The terminal device obtains the first measurement result by measuring the first reference signal. Upon the first measurement result being less than the first threshold, the terminal device starts the first timer. During the running of the first timer, the terminal device does not perform downlink reception; and/or the terminal device does not perform downlink measurement; and/or the terminal device does not perform uplink transmission. The terminal device can alert the user to improve the quality of wireless communication. For example, the PHY of the terminal device sends the first prompt information to the higher layer, or alerts/prompts the user via vibration, a ringtone, or a text prompt, such that the user can place the terminal device in an open area, or assist in adjusting the position, the antenna angle, etc., of the terminal device, to improve the communication quality of a wireless signal. The terminal device starts the second timer upon the expiry of the first timer. During the running of the second timer, the terminal device may perform downlink reception; and/or the terminal device may perform downlink measurement; and/or the terminal device may perform uplink transmission. In this way, the terminal device can also quickly recover wireless communication.

With the above method, the terminal device prompts the user to improve the quality of the wireless communication during the valid duration of the first timer. Upon the expiry of the first timer, the terminal device starts the second timer. During the running of the second timer, the terminal device may determine whether the wireless communication of the terminal device is recovered by performing downlink reception, downlink measurement, and/or uplink transmission.

Method 2, the terminal device determines whether wireless communication is recovered within the valid duration of the first timer.

In some embodiments, the terminal device does not start the second timer upon the expiry of the first timer.

In other words, this method does not include the operations at S730 and S740.

In some embodiments, within the valid duration of the first timer, the terminal device performs at least one of: downlink reception, downlink measurement, or uplink transmission.

In some embodiments, upon sending the first prompt information, the terminal device performs at least one of: downlink reception, downlink measurement, or uplink transmission.

In some embodiments, the valid duration of the first timer in Method 2 is longer than that in Method 1.

Exemplarily, the network device configures a first threshold, a valid duration of a first timer, and a first reference signal, where a measurement metric corresponding to a first measurement result is a hypothetical PDCCH BLER. The terminal device obtains the first measurement result by measuring the first reference signal. Upon the first measurement result being less than the first threshold, the terminal device starts the first timer. During the running of the first timer, the terminal device can alert the user to improve the quality of the wireless communication. For example, the PHY of the terminal device sends the first prompt information to the higher layer, or alerts/prompts the user via vibration, a ringtone, or a text prompt, such that the user can place the terminal device in an open area, or assist in adjusting the position, the antenna angle, etc., of the terminal device, to improve the communication quality of a wireless signal. Meanwhile, upon reserving sufficient time for alteration, the terminal device may perform downlink reception; and/or the terminal device may perform downlink measurement; and/or the terminal device may perform uplink transmission. In this way, the terminal device can also quickly recover wireless communication.

With the above method, during the running of the first timer, the terminal device prompts the user to improve the quality of the wireless communication, and may determine whether the wireless communication of the terminal device is recovered by performing downlink reception, downlink measurement, and/or uplink transmission.

In some embodiments, the operations at S710 include the following three implementations.

Method 1, the first timer is started and/or the first prompt information is sent upon occurrence of the first event.

In some embodiments, starting the first timer and/or sending the first prompt information upon occurrence of the first event includes at least one of the following. The first timer is started and/or the first prompt information is sent upon a first measurement result corresponding to a first reference signal being less than a first threshold. The first timer is started and/or the first prompt information is sent upon determination of RLF. The first timer is started and/or the first prompt information is sent upon determination of beam failure. The first timer is started and/or the first prompt information is sent upon a condition for initiating conditional handover being satisfied. The first timer is started and/or the first prompt information is sent upon reception of first indication information, where the first indication information is used for determining the first event. The first timer is started and/or the first prompt information is sent upon not receiving a target channel or a target signal, where the target channel or the target signal includes at least one of: a first reference signal, a first PDCCH, a PBCH, a paging channel, or first indication information.

In a case, the terminal device autonomously determines whether to start the first timer and/or send the first prompt information. Alternatively, the terminal device autonomously determines, based on the first indication information from the network device, whether to start the first timer and/or send the first prompt information. Optionally, the first indication information is used for configuring the first event.

Optionally, the terminal device autonomously determining whether to start the first timer and/or send the first prompt information includes at least one of the following. The first timer is started and/or the first prompt information is sent upon a first measurement result corresponding to a first reference signal being less than a first threshold. The first timer is started and/or the first prompt information is sent upon determination of RLF. The first timer is started and/or the first prompt information is sent upon determination of beam failure. The first timer is started and/or the first prompt information is sent upon a condition for initiating conditional handover being satisfied. The first timer is started and/or the first prompt information is sent upon not receiving a target channel or a target signal.

In another case, the terminal device determines, based on the indication from the network device, whether to start the first timer and/or send the first prompt information.

Optionally, upon reception of the first indication information, the terminal device starts the first timer and/or sends the first prompt information, where the first indication information is used for determining the first event.

With the above method, upon occurrence of the first event, the terminal device prompts the user to improve the quality of wireless communication, so as to recover the wireless communication as soon as possible.

Method 2: the first timer is started and/or the first prompt information is sent upon occurrence of the first event and elapse of the first duration.

In some embodiments, the first duration is configured, predefined, or pre-configured by the network device, or is determined by the terminal device.

In some embodiments, if the first duration is determined by the terminal device, the terminal device reports the first duration to the network device.

In some embodiments, starting the first timer and/or sending the first prompt information upon occurrence of the first event and elapse of the first duration includes at least one of the following. The first timer is started and/or the first prompt information is sent upon a first measurement result corresponding to a first reference signal being less than a first threshold and elapse of the first duration. The first timer is started and/or the first prompt information is sent upon determination of RLF and elapse of the first duration. The first timer is started and/or the first prompt information is sent upon determination of beam failure and elapse of the first duration. The first timer is started and/or the first prompt information is sent upon a condition for initiating conditional handover being satisfied and elapse of the first duration. The first timer is started and/or the first prompt information is sent upon reception of first indication information and elapse of the first duration, where the first indication information is used for determining the first event. The first timer is started and/or the first prompt information is sent upon not receiving a target channel or a target signal and elapse of the first duration, where the target channel or the target signal includes at least one of: the first reference signal, a first PDCCH, a PBCH, a paging channel, or the first indication information.

In a case, the terminal device autonomously determines whether to start the first timer and/or send the first prompt information. Alternatively, the terminal device autonomously determines, based on the first indication information from the network device, whether to start the first timer and/or send the first prompt information. Optionally, the first indication information is used for configuring the first event.

Optionally, the terminal device autonomously determining whether to start the first timer and/or send the first prompt information includes at least one of the following. The first timer is started and/or the first prompt information is sent upon a first measurement result corresponding to a first reference signal being less than a first threshold and elapse of the first duration. The first timer is started and/or the first prompt information is sent upon determination of RLF and elapse of the first duration. The first timer is started and/or the first prompt information is sent upon determination of beam failure and elapse of the first duration. The first timer is started and/or the first prompt information is sent upon a condition for initiating conditional handover being satisfied and elapse of the first duration. The first timer is started and/or the first prompt information is sent upon not receiving a target channel or a target signal and elapse of the first duration.

In another case, the terminal device determines, based on the indication from the network device, whether to start the first timer and/or send the first prompt information.

Optionally, upon reception of the first indication information and elapse of the first duration, the first timer is started and/or the first prompt information is sent, where the first indication information is used for determining the first event.

In some embodiments, upon occurrence of an issue in the wireless communication of the terminal device, the terminal device needs to recover the wireless communication. If the wireless communication of the terminal device is still not recovered after a period of time, the first timer will be started and/or the first prompt information will be sent.

With the above method, if the terminal device fails to recover the wireless communication for a period of time, the terminal device will prompt the user to improve the quality of wireless communication, so as to recover the wireless communication as soon as possible.

Method 3, the first timer is started and/or the first prompt information is sent before the first event occurs.

In some embodiments, starting the first timer and/or sending the first prompt information before the first event occurs includes at least one of the following. The first timer is started and/or the first prompt information is sent before RLF is determined. The first timer is started and/or the first prompt information is sent before beam failure is determined. The first timer is started and/or the first prompt information is sent before a BFRQ is initiated. The first timer is started and/or the first prompt information is sent before conditional handover is initiated.

In some embodiments, before RLF is determined means before the terminal device declares RLF, or before the PHY of the terminal device reports an OOS indication to the higher layer, or before the terminal device starts an RLM timer.

In some embodiments, before beam failure is determined means that the terminal device satisfies a condition for beam failure, but has not yet reported beam failure.

In some embodiments, before a BFRQ is initiated means that the terminal device is to initiate a BFRQ, but has not yet initiated the BFRQ.

In some embodiments, before conditional handover is initiated means that the terminal device satisfies a condition for conditional handover but has not yet started a handover process.

In some embodiments, the terminal device autonomously determines whether to start the first timer and/or send the first prompt information. Alternatively, the terminal device autonomously determines, based on the first indication information from the network device, whether to start the first timer and/or send the first prompt information. Optionally, the first indication information is used for configuring the first event.

Optionally, the terminal device autonomously determining whether to start the first timer and/or send the first prompt information includes at least one of the following. The first timer is started and/or the first prompt information is sent before RLF is determined. The first timer is started and/or the first prompt information is sent before beam failure is determined. The first timer is started and/or the first prompt information is sent before a BFRQ is initiated. The first timer is started and/or the first prompt information is sent before conditional handover is initiated.

With the above method, before the terminal device detects a wireless communication issue but has not yet addressed it, the terminal device prompts the user to improve the quality of the wireless communication, so as to recover the wireless communication as soon as possible.

In some embodiments, if the wireless communication is still not recovered after the terminal device has continuously started the first timer, the terminal device will no longer start the first timer.

In some embodiments, the number of times that the terminal device starts the first timer is less than or equal to a second threshold, or the number of times that the terminal device starts the first timer within a second duration is less than or equal to the second threshold.

In some embodiments, the second threshold is configured, predefined, or pre-configured by the network device, or is determined by the terminal device.

In some embodiments, if the second threshold is determined by the terminal device, the terminal device reports the second threshold to the network device.

In some embodiments, the number of times when the terminal device starts the first timer is less than or equal to the second threshold.

In some embodiments, the number of times that the terminal device starts the first timer within the second duration is less than or equal to the second threshold.

In some embodiments, the second duration is configured, predefined, or pre-configured by the network device, or is determined by the terminal device.

In some embodiments, if the second duration is determined by the terminal device itself, the terminal device reports the second duration to the network device.

In some embodiments, before the operations at S710, the method further includes operations at S750 (not illustrated in FIG. 7).

At S750, the terminal device sends second indication information to the network device, where the second indication information is used for reporting at least one of the following: the terminal device has a capability to send the first prompt information; a first duration; a second duration; a first threshold; or a second threshold.

In some embodiments, if any one or more parameters among the first duration, the second duration, the first threshold, and the second threshold are determined by the terminal device, the terminal device performs the operations at S750, where the second indication information indicates the one or more parameters determined by the terminal device.

Exemplarily, if the first duration is determined by the terminal device, the terminal device performs the operations at S750, where the second indication information is used for reporting the first duration.

Exemplarily, if the second duration is determined by the terminal device, the terminal device performs the operations at S750, where the second indication information is used for reporting the second duration.

Exemplarily, if the first threshold is determined by the terminal device, the terminal device performs the operations at S750, where the second indication information is used for reporting the first threshold.

Exemplarily, if the second threshold is determined by the terminal device, the terminal device performs the operations at S750, where the second indication information is used for reporting the second threshold.

Exemplarily, if the first duration and the first threshold are determined by the terminal device, the terminal device performs the operations at S750, where the second indication information is used for reporting the first duration and the first threshold.

In some embodiments, there may be one or more second indication information. In some embodiments, if there are multiple second indication information, contents indicated by the multiple second indication information may be the same or different. Exemplarily, one second indication information indicates the first duration, and another second indication information indicates the second duration. Exemplarily, two second indication information each indicate both the first duration and the second duration.

The methods provided in embodiments of the present disclosure are given as examples but not as limitations. The following embodiments are provided in combination with different situations.

### I. Initial Access Process

The terminal device presets a first threshold. When the terminal device detects a synchronization signal but does not receive a PBCH, or when a measurement result of the synchronization signal by the terminal device is less than the first threshold, the terminal device starts a first timer and/or sends first prompt information to prompt a user to improve quality of the wireless communication. Upon reserving sufficient time for alteration, the terminal device retries receiving an SSB.

The terminal device presets a first threshold, or the network device configures a first threshold via an MIB. When the terminal device detects an SSB but does not receive system information, or when a measurement result of an SSB by the terminal device is less than the first threshold, the terminal device starts the first timer and/or sends the first prompt information to prompt the user to improve the quality of the wireless communication. Upon reserving sufficient time for alteration, the terminal device retries receiving the SSB.

### II. RLM Process

The terminal device presets a first threshold, or the network device configures a first threshold. The network device configures "alert on".

Before a PHY of the terminal device reports an OOS indication to a higher layer, or before the terminal device starts an RLM timer, or before the terminal device declares an RLF, the terminal device starts the first timer. During the running of the first timer, the terminal device prompts the user to improve the quality of the wireless communication. Upon reserving sufficient time for alteration, the terminal device re-performs an RLM process.

Alternatively, before the PHY of the terminal device reports an OOS indication to the higher layer, or before the terminal device starts an RLM timer, or before the terminal device declares an RLF, the terminal device starts the first timer. During the running of the first timer, the terminal device prompts the user to improve the quality of the wireless communication. The terminal device starts a second timer upon expiry of the first timer. During the running of the second timer, the terminal device re-performs an RLM process.

In some embodiments, if the event (the PHY reports the OOS indication to the higher layer, or the terminal device starts the RLM timer or declares the RLF) still occurs during re-performing RLM by the terminal device, the first timer will not be started and/or the first prompt information will not be sent.

### III. RRM Measurement

The terminal device presets a first threshold, or the network device configures a first threshold. The network device configures "alert on".

During RRM measurement, upon a measurement result of a measurement reference signal by the terminal device being less than the first threshold, the terminal device starts the first timer. During the running of the first timer, the terminal device prompts the user to improve the quality of the wireless communication. Upon reserving sufficient time for alteration, the terminal device re-performs RRM measurement.

Alternatively, during RRM measurement, upon a measurement result of a measurement reference signal by the terminal device being less than the first threshold, the terminal device starts the first timer. During the running of the first timer, the terminal device prompts the user to improve the quality of the wireless communication. The terminal device starts a second timer upon the expiry of the first timer. During the running of the second timer, the terminal device re-performs RRM measurement.

In some embodiments, if the event (the measurement result of the measurement reference signal is less than the first threshold) still occurs during re-performing RRM measurement by the terminal device, the first timer will not be started and/or the first prompt information will not be sent.

### IV. BFR Mechanism

The terminal device presets a first threshold, or the network device configures a first threshold. The network device configures "alert on".

Upon occurrence of one or more events in a BFR mechanism, the terminal device starts the first timer. During the running of the first timer, the terminal device prompts the user to improve the quality of the wireless communication. Upon reserving sufficient time for alteration, the terminal device recovers the BFR mechanism.

Alternatively, the terminal device starts the first timer. During the running of the first timer, the terminal device prompts the user to improve the quality of the wireless communication. The terminal device starts a second timer upon the expiry of the first timer. During the running of the second timer, the terminal device recovers the BFR mechanism.

In some embodiments, if the event still occurs during re-performing the BFR, an alert will not be triggered.

The one or more events in the BFR mechanism include the following. A measurement result of a CSI-RS by the terminal device is less than a first threshold during BFD. The terminal device reports one BFI during BFD. The terminal device determines that beam failure occurs during BFD. Measured values corresponding to all candidate beams are less than a threshold configured by the network during NBI. Measured values corresponding to all candidate beams are less than the first threshold during NBI. A measurement result of SSB signal quality is less than the first threshold during BFRQ. The terminal device resends a BFRQ during a network device response process.

FIG. 8 illustrates a flowchart of a method for wireless communication provided in an embodiment of the present disclosure. The method is performed by a network device, and the method may include operations at S810.

At 810, a network device sends first configuration information to a terminal device, where the first configuration information is used for configuring the terminal device to start a first timer and/or send first prompt information based on a first event, and the first event is related to communication quality of the terminal device.

In some embodiments, the first configuration information is used for configuring at least one of: the first timer, a start time of the first timer, a valid duration of the first timer, the first event, a first threshold, a first reference signal, a measurement metric corresponding to a first measurement result, or a first duration.

In some embodiments, the first configuration information includes first indication information. In an example, the first configuration information carries the first indication information. In another example, the first configuration information and the first indication information are the same.

In some embodiments, the method further includes operations at S820 (not illustrated in the figure).

At 820, the network device sends second configuration information to the terminal device, where the second configuration information is used for configuring at least one of: a second timer, a start time of the second timer, and a valid duration of the second timer, or the second timer is started upon expiry of the first timer.

In some embodiments, the method further includes operations at S830 (not illustrated in the figure).

At 830, the network device receives second indication information sent by the terminal device, where the second indication information is used for reporting at least one of the following: the terminal device has a capability to send the first prompt information; a first duration; a second duration; a first threshold; or a second threshold, where the first duration is related to a start time of the first timer, the second duration is related to the number of times that the terminal device starts the first timer, and the second threshold is related to the number of times that the terminal device starts the first timer.

With the technical solutions provided in embodiments of the present disclosure, the network device sends the first configuration information to the terminal device, to configure the terminal device to start the first timer and/or send the first prompt information based on the first event, such that the terminal device can alert a user to improve the communication quality of the terminal device in the case where the communication quality is relatively poor or a communication interruption occurs. For example, the terminal device prompts the user to move the terminal device to an open position or to assist in adjusting a position or an antenna angle of the terminal device, which improves the robustness of signal transmission, thereby improving the communication quality of wireless signals and enabling rapid recovery of wireless communication.

The following are apparatus embodiments of the present disclosure, which can be used to perform the method embodiments of the present disclosure. For details not disclosed in the apparatus embodiments of the present disclosure, reference may be made to the method embodiments of the present disclosure.

FIG. 9 illustrates a block diagram of an apparatus for wireless communication provided in an embodiment of the present disclosure. The apparatus has the function of implementing the method for wireless communication performed by the terminal device. The function may be implemented by means of hardware or hardware executing corresponding software. The apparatus may be the terminal device, or may be disposed in the terminal device. As illustrated in FIG. 9, the apparatus 900 may include a processing module 910. The processing module 910 is configured to start a first timer and/or send first prompt information based on a first event, where the first event is related to communication quality of the terminal device.

In some embodiments, the first event includes at least one of the following: a first measurement result corresponding to a first reference signal is less than a first threshold; RLF; beam failure; NBI; a BFRQ; conditional handover; the first reference signal is not received; a first PDCCH is not received; a PBCH is not received; a paging channel is not received; first indication information is received, where the first indication information is used for determining the first event; or the first indication information is not received.

In some embodiments, the first reference signal includes at least one of: an SSB, a CSI-RS, or a synchronization signal.

In some embodiments, a measurement metric corresponding to the first measurement result includes at least one of: a hypothetical PDCCH BLER, RSRP, RSRQ, or SINR.

In some embodiments, the first threshold is configured, predefined, or pre-configured by the network device, or is determined by the terminal device.

In some embodiments, the first indication information is used for determining the first event as follows. The first indication information indicates the first event. Alternatively, the first indication information is used for configuring the first event.

In some embodiments, the first indication information is carried in at least one of the following signaling: DCI, RRC signaling, an MAC CE, or system information.

In some embodiments, the first indication information is carried in at least one of the following signals or channels: a PDCCH, a PDSCH, a PBCH, an SSB, a CSI-RS, or a PRS.

In some embodiments, the processing module 910 is configured to start the first timer and/or send the first prompt information upon occurrence of the first event. Alternatively, the processing module 910 is configured to start the first timer and/or send the first prompt information upon occurrence of the first event and elapse of a first duration. Alternatively, the processing module 910 is configured to start the first timer and/or send the first prompt information before the first event occurs.

In some embodiments, starting the first timer and/or sending the first prompt information upon occurrence of the first event includes at least one of the following. The first timer is started and/or the first prompt information is sent upon a first measurement result corresponding to a first reference signal being less than a first threshold. The first timer is started and/or the first prompt information is sent upon determination of RLF. The first timer is started and/or the first prompt information is sent upon determination of beam failure. The first timer is started and/or the first prompt information is sent upon a condition for initiating conditional handover being satisfied. The first timer is started and/or the first prompt information is sent upon reception of first indication information, where the first indication information is used for determining the first event. The first timer is started and/or the first prompt information is sent upon not receiving a target channel or a target signal, where the target channel or the target signal includes at least one of: the first reference signal, a first PDCCH, a PBCH, a paging channel, or the first indication information.

In some embodiments, starting the first timer and/or sending the first prompt information upon occurrence of the first event and elapse of the first duration includes at least one of the following. The first timer is started and/or the first prompt information is sent upon a first measurement result corresponding to a first reference signal being less than a first threshold and elapse of the first duration. The first timer is started and/or the first prompt information is sent upon determination of RLF and elapse of the first duration elapses. The first timer is started and/or the first prompt information is sent upon determination of beam failure and elapse of the first duration. The first timer is started and/or the first prompt information is sent upon a condition for initiating conditional handover being satisfied and elapse of the first duration. The first timer is started and/or the first prompt information is sent upon reception of first indication information and elapse of the first duration, where the first indication information is used for determining the first event. The first timer is started and/or the first prompt information is sent upon not receiving a target channel or a target signal and elapse of the first duration, where the target channel or the target signal includes at least one of: the first reference signal, a first PDCCH, a PBCH, a paging channel, or the first indication information.

In some embodiments, starting the first timer and/or sending the first prompt information before the first event occurs includes at least one of the following. The first timer is started and/or the first prompt information is sent before RLF is determined. The first timer is started and/or the first prompt information is sent before beam failure is determined. The first timer is started and/or the first prompt information is sent before a BFRQ is initiated. The first timer is started and/or the first prompt information is sent before conditional handover is initiated.

In some embodiments, the first duration is configured, predefined, or pre-configured by the network device, or is determined by the terminal device.

In some embodiments, the apparatus 900 further includes a receiving module 920 (not illustrated in FIG. 9).

The receiving module 920 is configured to receive first configuration information sent by a network device, where the first configuration information is used for configuring at least one of: the first timer, a start time of the first timer, a valid duration of the first timer, the first event, a first threshold, a first reference signal, a measurement metric corresponding to a first measurement result, or a first duration.

In some embodiments, starting the first timer and/or sending the first prompt information based on the first event includes the following. The first timer is started based on the first event, and the first prompt information is sent within a valid duration of the first timer.

In some embodiments, the processing module 910 is further configured to start a second timer upon expiry of the first timer.

In some embodiments, the processing module 910 is further configured to, within a valid duration of the first timer, restrain from performing at least one of: downlink reception, downlink measurement, or uplink transmission.

In some embodiments, the processing module 910 is further configured to, within a valid duration of the second timer, perform at least one of: downlink reception, downlink measurement, or uplink transmission.

In some embodiments, the receiving module 9 20 is further configured to receive second configuration information sent by a network device, where the second configuration information is used for configuring at least one of: the second timer, a start time of the second timer, or a valid duration of the second timer.

In some embodiments, the processing module 910 is further configured to, within a valid duration of the first timer, perform at least one of: downlink reception, downlink measurement, or uplink transmission.

In some embodiments, the number of times that the terminal device starts the first timer is less than or equal to a second threshold, or the number of times that the terminal device starts the first timer within a second duration is less than or equal to the second threshold.

In some embodiments, the second threshold is configured, predefined, or pre-configured by the network device, or is determined by the terminal device.

In some embodiments, the second duration is configured, predefined, or pre-configured by the network device, or is determined by the terminal device.

In some embodiments, the apparatus 900 further includes a sending module 930 (not illustrated in FIG. 9).

The sending module 930 is configured to send second indication information to a network device, where the second indication information is used for reporting at least one of the following: the terminal device has a capability to send the first prompt information; a first duration; a second duration; a first threshold; or a second threshold.

In some embodiments, the first prompt information is used for alerting a user to improve the communication quality of the terminal device.

With the technical solutions provided in embodiments of the present disclosure, the terminal device determines, based on the event related to the communication quality of the terminal device, whether to start the first timer and/or send the first prompt information. In the case where the communication quality of the terminal device is relatively poor or a communication interruption occurs, the terminal device can alert a user to improve the communication quality of the terminal device via the first prompt information within a valid duration of the first timer. For example, the terminal device prompts the user to move the terminal device to an open position or to assist in adjusting a position or an antenna angle of the terminal device, which improves the robustness of signal transmission, thereby improving the communication quality of wireless signals and enabling rapid recovery of wireless communication.

FIG. 10 illustrates a block diagram of an apparatus for wireless communication provided in another embodiment of the present disclosure. The apparatus has the function of implementing the method for wireless communication performed by the network device. The function may be implemented by means of hardware or hardware executing corresponding software. The apparatus may be the terminal device, or may be disposed in the terminal device. As illustrated in FIG. 10, the apparatus 1000 may include a sending module 1010. The sending module 1010 is configured to send first configuration information to a terminal device, where the first configuration information is used for configuring the terminal device to start a first timer and/or send first prompt information based on a first event, and the first event is related to communication quality of the terminal device.

In some embodiments, the first event includes at least one of the following: a first measurement result corresponding to a first reference signal is less than a first threshold; RLF; beam failure; NBI; a BFRQ; conditional handover; the first reference signal is not received; a first PDCCH is not received; a PBCH is not received; a paging channel is not received; first indication information is received, where the first indication information is used for determining the first event; or the first indication information is not received.

In some embodiments, the first reference signal includes at least one of: an SSB, a CSI-RS, or a synchronization signal.

In some embodiments, a measurement metric corresponding to the first measurement result includes at least one of: a hypothetical PDCCH BLER, RSRP, RSRQ, or SINR.

In some embodiments, the first threshold is configured, predefined, or pre-configured by the network device, or is determined by the terminal device.

In some embodiments, the first indication information is used for determining the first event as follows. The first indication information indicates the first event. Alternatively, the first indication information is used for configuring the first event.

In some embodiments, the first indication information is carried in at least one of the following signaling: DCI, RRC signaling, an MAC CE, or system information.

In some embodiments, the first indication information is carried in at least one of the following signals or channels: a PDCCH, a PDSCH, a PBCH, an SSB, a CSI-RS, or a PRS.

In some embodiments, the first configuration information is used for configuring at least one of: the first timer, a start time of the first timer, a valid duration of the first timer, the first event, a first threshold, a first reference signal, a measurement metric corresponding to a first measurement result, or a first duration.

In some embodiments, the sending module 1010 is further configured to send second configuration information to the terminal device, where the second configuration information is used for configuring at least one of: a second timer, a start time of the second timer, or a valid duration of the second timer, where the second timer is started upon expiry of the first timer.

In some embodiments, the apparatus 1000 further includes a receiving module 1020 (not illustrated in FIG. 10). The receiving module 1020 is configured to receive second indication information sent by the terminal device, where the second indication information is used for reporting at least one of the following: the terminal device has a capability to send the first prompt information; a first duration; a second duration; a first threshold; or a second threshold, where the first duration is related to a start time of the first timer, the second duration is related to the number of times that the terminal device starts the first timer, and the second threshold is related to the number of times that the terminal device starts the first timer.

In some embodiments, the first prompt information is used for alerting a user to improve the communication quality of the terminal device.

With the technical solutions provided in embodiments of the present disclosure, the network device sends the first configuration information to the terminal device, to configure the terminal device to start the first timer and/or send the first prompt information based on the first event, such that the terminal device can alert a user to improve the communication quality of the terminal device in the case where the communication quality is relatively poor or a communication interruption occurs. For example, the terminal device prompts the user to move the terminal device to an open position or to assist in adjusting a position or an antenna angle of the terminal device, which improves the robustness of signal transmission, thereby improving the communication quality of wireless signals and enabling rapid recovery of wireless communication.

It can be noted that, when the apparatus provided in the foregoing embodiments implements its functions, only the division into the above functional modules is taken an example for illustration. In practice, the above functions can be allocated to different functional modules according to actual needs, that is, the structure of the device is divided into different functional modules to complete all or some of the functions mentioned above.

Regarding the apparatus in the foregoing embodiments, the manner in which each module performs operations is elaborated in the related method embodiments and thus will not be elaborated again herein.

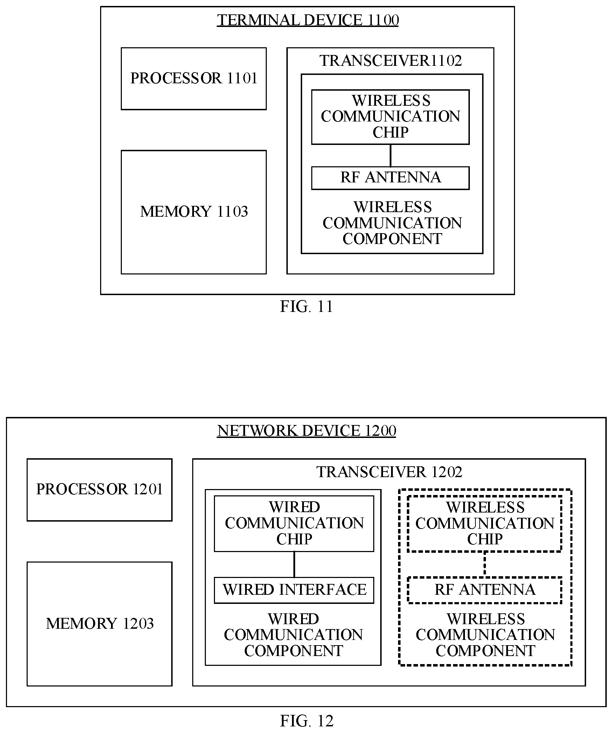

FIG. 11 illustrates a schematic structural diagram of a terminal device provided in an embodiment of the present disclosure. The terminal device 1100 may include a processor 1101, a transceiver 1102, and a memory 1103. The transceiver 1102 is configured to implement sending or receiving functions, such as implementing the function(s) of the sending module 930 and the function(s) of the receiving module 920. The processor 1101 may be configured to implement other processing functions or control sending and/or receiving, such as implementing the function(s) of the processing module 910.

The processor 1101 includes one or more processing cores, and the processor 1101 executes various function applications and information processing by running software programs and modules.

The transceiver 1102 may include a receiver and a transmitter. For example, the receiver and transmitter may be implemented as the same wireless communication component, and the wireless communication component may include a wireless communication chip and a radio frequency (RF) antenna.

The memory 1103 may be coupled with the processor 1101 and the transceiver 1102.

The memory 1103 may be configured to store a computer program executed by the processor, and the processor 1101 is configured to execute the computer program to implement the various steps in the foregoing method embodiments.

In some embodiments, the processor 1101 is configured to start a first timer and/or send first prompt information based on a first event, where the first event is related to the communication quality of the terminal device.

For details not mentioned in the embodiment, reference may be made to those in the foregoing embodiments, which will not be repeated herein.

In addition, the memory may be implemented by any type of volatile or nonvolatile storage device or combination thereof. The volatile or non-volatile storage device includes, but is not limited to, a magnetic disk or an optical disk, an electrically-erasable programmable read-only memory (EEPROM), an erasable programmable ROM (EPROM), a static random access memory (SRAM), an ROM, a magnetic memory, a flash memory, or a PROM.

FIG. 12 illustrates a schematic structural diagram of a network device 1200 provided in an embodiment of the present disclosure. The network device 1200 may be configured to execute the operations performed by the network device in the foregoing embodiments. The network device 1200 may include a processor 1201, a transceiver 1202, and a memory 1203. The transceiver 1202 is configured to implement sending or receiving functions, such as implementing the function(s) of the sending module 1010 and the function(s) of the receiving module 1020. The processor 1201 may be configured to implement other processing functions or control sending and/or receiving.

The processor 1201 includes one or more processing cores, and the processor 1201 executes various function applications and information processing by running software programs and modules.

The transceiver 1202 may include a receiver and a transmitter. For example, the transceiver 1202 may include a wired communication component, and the wired communication component may include a wired communication chip and a wired interface (such as a fiber optic interface). Optionally, the transceiver 1202 may also include a wireless communication component, and the wireless communication component may include a wireless communication chip and an RF antenna.

The memory 1203 may be connected to the processor 1201 and the transceiver 1202.

The memory 1203 may be configured to store a computer program executed by the processor, and the processor 1201 is configured to execute the computer program to implement the various steps performed by the network device in the foregoing method embodiments.

In addition, the memory 1203 may be implemented by any type of volatile or nonvolatile storage device or combination thereof. The volatile or non-volatile storage device includes, but is not limited to, a magnetic disk or an optical disk, an EEPROM, an EPROM, an SRAM, an ROM, a magnetic memory, a flash memory, or a PROM.

In some embodiments, the transceiver 1202 is configured to send first configuration information to a terminal device, where the first configuration information is used for configuring the terminal device to start a first timer and/or send first prompt information based on a first event, and the first event is related to communication quality of the terminal device.

For details not mentioned in the embodiment, reference may be made to those in the foregoing embodiments, which will not be repeated herein.

A computer-readable storage medium is further provided in embodiments of the present disclosure. The computer-readable storage medium is configured to store a computer program which, when executed by a processor, causes the processor to implement the method for wireless communication performed by the terminal device or to implement the method for wireless communication performed by the network device. In some embodiments, the computer-readable storage medium may include an ROM, an RAM, a solid state drive (SSD), or an optical disc, etc. The RAM may include a resistance random access memory (ReRAM) and a dynamic random access memory (DRAM).

A chip is further provided in embodiments of the present disclosure. The chip includes programmable logic circuits and/or program indications which, when executed on the chip, cause the chip to implement the method for wireless communication performed by the terminal device or to implement the method for wireless communication performed by the network device.

A computer program product is further provided in embodiments of the present disclosure. The computer program product includes computer instructions that are stored in a computer-readable storage medium, and a processor is configured to read the computer instructions stored in the computer-readable storage medium and execute the computer instructions to implement the method for wireless communication performed by the terminal device or to implement the method for wireless communication performed by the network device.

It may be understood that, "indication" referred to in embodiments of the present disclosure may be a direct indication, may be an indirect indication, or may mean that there is an association relationship. For example, A indicates B may mean that A directly indicates B, For example, B can be obtained according to A; may mean that A indirectly indicates B, For example, A indicates C, and B can be obtained according to C; or may mean that there is an association relationship between A and B.

In the elaboration of embodiments of the present disclosure, the term "correspondence" may mean that there is a direct or indirect correspondence between the two, may mean that there is an association between the two, may mean a relationship of indicating and indicated or configuring and configured, etc.

In embodiments of the present disclosure, the "pre-defined" can be implemented by pre-saving a corresponding code or table in a device (for example, including the terminal device and the network device) or in other manners that can be used for indicating related information, and the present disclosure is not limited in this regard. For example, the "pre-defined" may mean defined in a protocol.

In embodiments of the present disclosure, the "protocol" may refer to a communication standard protocol, which may include, for example, an LTE protocol, an NR protocol, and a protocol applied to a future communication system, which is not limited in the present disclosure.

In embodiments of the present disclosure, "a plurality of", "the plurality of", or "multiple" refers to two or more. "And/or" describes an association relationship between associated objects, which means that there may be three relationships. For example, A and/or B can mean A alone, both A and B exist, and B alone. The character "/" herein generally indicates that the associated objects are in an "or" relationship.

In embodiments of the present disclosure, "greater than or equal to" may indicate greater than or equal to or just greater than, and "less than or equal to" may indicate less than or equal to or just less than.

In addition, the serial numbers of the processes mentioned herein only exemplify one possible sequence of performing the processes. In some other embodiments, the processes may also be performed out of the numbering sequence. For example, two processes with different serial numbers are performed simultaneously, or two processes with different serial numbers are performed in a reverse order to the illustrated sequence, which is not limited in the present disclosure.

Those skilled in the art can appreciate that in one or more of the above examples, the functions mentioned in embodiments of the present disclosure may be implemented by hardware, software, firmware, or any combination thereof. When implemented by software, the functions may be stored in a computer-readable medium or transmitted as one or more instructions or codes in the computer-readable medium. The computer-readable medium includes a computer storage medium and a communication medium, where the communication medium includes any medium that facilitates transfer of a computer program from one place to another, and the storage medium may be any available medium that can be accessed by a general-purpose computer or a special-purpose computer.

The foregoing elaborations are merely exemplary embodiments of the present disclosure, and are not intended to limit the present disclosure. Any modification, equivalent replacement, and improvement made within the concept and principle of the present disclosure shall fall within the protection scope of the present disclosure.

## Claims

1. A method for wireless communication, performed by a terminal device and comprising:
starting a first timer and/or sending first prompt information based on a first event,
wherein the first event is related to communication quality of the terminal device.

2. The method of claim 1, wherein the first event comprises at least one of the following:
a first measurement result corresponding to a first reference signal is less than a first threshold;
radio link failure (RLF);
beam failure;
new beam identification (NBI);
a beam failure recovery request (BFRQ);
conditional handover;
the first reference signal is not received;
a first physical downlink control channel (PDCCH) is not received;
a physical broadcast channel (PBCH) is not received;
a paging channel is not received;
first indication information is received, wherein the first indication information is used for determining the first event; or
the first indication information is not received.

3. The method of claim 2, wherein the first reference signal comprises at least one of: a synchronizing signal/PBCH block (SSB), a channel state information-reference signal (CSI-RS), or a synchronization signal.

4. The method of claim 2 or 3, wherein a measurement metric corresponding to the first measurement result comprises at least one of: a hypothetical PDCCH block error rate (BLER), reference signal received power (RSRP), reference signal received quality (RSRQ), or a signal-to-interference-plus-noise ratio (SINR).

5. The method of any one of claims 2 to 4, wherein the first threshold is configured, predefined, or pre-configured by a network device, or is determined by the terminal device.

6. The method of any one of claims 2 to 5, wherein the first indication information being used for determining the first event comprises that:
the first indication information indicates the first event; or
the first indication information is used for configuring the first event.

7. The method of any one of claims 2 to 6, wherein the first indication information is carried in at least one of the following signaling: downlink control information (DCI), radio resource control (RRC) signaling, a medium access control control element (MAC CE), or system information.

8. The method of any one of claims 2 to 7, wherein the first indication information is carried in at least one of the following signals or channels: a PDCCH, a physical downlink shared channel (PDSCH), a PBCH, an SSB, a CSI-RS, or a positioning reference signal (PRS).

9. The method of any one of claims 1 to 8, wherein starting the first timer and/or sending the first prompt information based on the first event comprises:
starting the first timer and/or sending the first prompt information upon occurrence of the first event; or
starting the first timer and/or sending the first prompt information upon occurrence of the first event and elapse of a first duration; or
starting the first timer and/or sending the first prompt information before the first event occurs.

10. The method of claim 9, wherein starting the first timer and/or sending the first prompt information upon occurrence of the first event comprises at least one of:
starting the first timer and/or sending the first prompt information upon a first measurement result corresponding to a first reference signal being less than a first threshold;
starting the first timer and/or sending the first prompt information upon determination of RLF;
starting the first timer and/or sending the first prompt information upon determination of beam failure;
starting the first timer and/or sending the first prompt information upon a condition for initiating conditional handover being satisfied;
starting the first timer and/or sending the first prompt information upon reception of first indication information, wherein the first indication information is used for determining the first event; or
starting the first timer and/or sending the first prompt information upon not receiving a target channel or a target signal;
wherein the target channel or the target signal comprises at least one of: the first reference signal, a first PDCCH, a PBCH, a paging channel, or the first indication information.

11. The method of claim 9, wherein starting the first timer and/or sending the first prompt information upon occurrence of the first event and elapse of the first duration comprises at least one of:
starting the first timer and/or sending the first prompt information upon a first measurement result corresponding to a first reference signal being less than a first threshold and elapse of the first duration;
starting the first timer and/or sending the first prompt information upon determination of RLF and elapse of the first duration;
starting the first timer and/or sending the first prompt information upon determination of beam failure and elapse of the first duration;
starting the first timer and/or sending the first prompt information upon a condition for initiating conditional handover being satisfied and elapse of the first duration;
starting the first timer and/or sending the first prompt information upon reception of first indication information and elapse of the first duration, wherein the first indication information is used for determining the first event; or
starting the first timer and/or sending the first prompt information upon not receiving a target channel or a target signal and elapse of the first duration;
wherein the target channel or the target signal comprises at least one of: the first reference signal, a first PDCCH, a PBCH, a paging channel, or the first indication information.

12. The method of claim 9, wherein starting the first timer and/or sending the first prompt information before the first event occurs comprises at least one of:
starting the first timer and/or sending the first prompt information before RLF is determined;
starting the first timer and/or sending the first prompt information before beam failure is determined;
starting the first timer and/or sending the first prompt information before a BFRQ is initiated; or
starting the first timer and/or sending the first prompt information before conditional handover is initiated.

13. The method of any one of claims 9 to 12, wherein the first duration is configured, predefined, or pre-configured by a network device, or is determined by the terminal device.

14. The method of any one of claims 1 to 13, further comprising:
receiving first configuration information sent by a network device, wherein the first configuration information is used for configuring at least one of: the first timer, a start time of the first timer, a valid duration of the first timer, the first event, a first threshold, a first reference signal, a measurement metric corresponding to a first measurement result, or a first duration.

15. The method of any one of claims 1 to 14, wherein starting the first timer and/or sending the first prompt information based on the first event comprises:
starting the first timer based on the first event, and sending the first prompt information within a valid duration of the first timer.

16. The method of any one of claims 1 to 15, further comprising:
starting a second timer upon expiry of the first timer.

17. The method of claim 16, further comprising:
within a valid duration of the first timer, restraining from performing at least one of:
downlink reception, downlink measurement, or uplink transmission.

18. The method of claim 16 or 17, further comprising:
within a valid duration of the second timer, performing at least one of: downlink reception, downlink measurement, or uplink transmission.

19. The method of any one of claims 16 to 18, further comprising:
receiving second configuration information sent by a network device, wherein the second configuration information is used for configuring at least one of: the second timer, a start time of the second timer, or a valid duration of the second timer.

20. The method of any one of claims 1 to 15, further comprising:
within a valid duration of the first timer, performing at least one of: downlink reception, downlink measurement, or uplink transmission.

21. The method of any one of claims 1 to 20, wherein a number of times that the terminal device starts the first timer is less than or equal to a second threshold, or a number of times that the terminal device starts the first timer within a second duration is less than or equal to the second threshold.

22. The method of claim 21, wherein the second threshold is configured, predefined, or pre-configured by a network device, or is determined by the terminal device.

23. The method of claim 21 or 22, wherein the second duration is configured, predefined, or pre-configured by a network device, or is determined by the terminal device.

24. The method of any one of claims 1 to 23, further comprising:
sending second indication information to a network device, wherein the second indication information is used for reporting at least one of the following: the terminal device has a capability to send the first prompt information, a first duration, a second duration, a first threshold, or a second threshold.

25. The method of any one of claims 1 to 24, wherein the first prompt information is used for alerting a user to improve the communication quality of the terminal device.

26. A method for wireless communication, performed by a network device and comprising:
sending first configuration information to a terminal device, wherein the first configuration information is used for configuring the terminal device to start a first timer and/or send first prompt information based on a first event, and the first event is related to communication quality of the terminal device.

27. The method of claim 26, wherein the first event comprises at least one of the following:
a first measurement result corresponding to a first reference signal is less than a first threshold;
radio link failure (RLF);
beam failure;
new beam identification (NBI);
a beam failure recovery request (BFRQ);
conditional handover;
the first reference signal is not received;
a first physical downlink control channel (PDCCH) is not received;
a physical broadcast channel (PBCH) is not received;
a paging channel is not received;
first indication information is received, wherein the first indication information is used for determining the first event; or
the first indication information is not received.

28. The method of claim 27, wherein the first reference signal comprises at least one of: a synchronizing signal/PBCH block (SSB), a channel state information-reference signal (CSI-RS), or a synchronization signal.

29. The method of claim 27 or 28, wherein a measurement metric corresponding to the first measurement result comprises at least one of: a hypothetical PDCCH block error rate (BLER), reference signal received power (RSRP), reference signal received quality (RSRQ), or a signal-to-interference-plus-noise ratio (SINR).

30. The method of any one of claims 27 to 29, wherein the first threshold is configured, predefined, or pre-configured by the network device, or is determined by the terminal device.

31. The method of any one of claims 27 to 30, wherein the first indication information being used for determining the first event comprises that:
the first indication information indicates the first event; or
the first indication information is used for configuring the first event.

32. The method of any one of claims 27 to 31, wherein the first indication information is carried in at least one of the following signaling: downlink control information (DCI), radio resource control (RRC) signaling, a medium access control control element (MAC CE), or system information.

33. The method of any one of claims 27 to 32, wherein the first indication information is carried in at least one of the following signals or channels: a PDCCH, a physical downlink shared channel (PDSCH), a PBCH, an SSB, a CSI-RS, or a positioning reference signal (PRS).

34. The method of any one of claims 26 to 33, wherein the first configuration information is used for configuring at least one of: the first timer, a start time of the first timer, a valid duration of the first timer, the first event, a first threshold, a first reference signal, a measurement metric corresponding to a first measurement result, or a first duration.

35. The method of any one of claims 26 to 34, further comprising:
sending second configuration information to the terminal device, wherein the second configuration information is used for configuring at least one of: a second timer, a start time of the second timer, or a valid duration of the second timer, wherein the second timer is started upon expiry of the first timer.

36. The method of any one of claims 26 to 35, further comprising:
receiving second indication information sent by the terminal device, wherein the second indication information is used for reporting at least one of the following: the terminal device has a capability to send the first prompt information, a first duration, a second duration, a first threshold, or a second threshold, wherein the first duration is related to a start time of the first timer, the second duration is related to a number of times that the terminal device starts the first timer, and the second threshold is related to the number of times that the terminal device starts the first timer.

37. The method of any one of claims 26 to 36, wherein the first prompt information is used for alerting a user to improve the communication quality of the terminal device.

38. An apparatus for wireless communication, disposed in a terminal device and comprising:
a processing module configured to start a first timer and/or send first prompt information based on a first event, wherein the first event is related to communication quality of the terminal device.

39. The apparatus of claim 38, wherein the first event comprises at least one of the following:
a first measurement result corresponding to a first reference signal is less than a first threshold;
radio link failure (RLF);
beam failure;
new beam identification (NBI);
a beam failure recovery request (BFRQ);
conditional handover;
the first reference signal is not received;
a first physical downlink control channel (PDCCH) is not received;
a physical broadcast channel (PBCH) is not received;
a paging channel is not received;
first indication information is received, wherein the first indication information is used for determining the first event; or
the first indication information is not received.

40. The apparatus of claim 38, wherein the first reference signal comprises at least one of: a synchronizing signal/PBCH block (SSB), a channel state information-reference signal (CSI-RS), or a synchronization signal.

41. The apparatus of claim 39 or 40, wherein a measurement metric corresponding to the first measurement result comprises at least one of: a hypothetical PDCCH block error rate (BLER), reference signal received power (RSRP), reference signal received quality (RSRQ), or a signal-to-interference-plus-noise ratio (SINR).

42. The apparatus of any one of claims 39 to 41, wherein the first threshold is configured, predefined, or pre-configured by a network device, or is determined by the terminal device.

43. The apparatus of any one of claims 39 to 42, wherein the first indication information being used for determining the first event comprises that:
the first indication information indicates the first event; or
the first indication information is used for configuring the first event.

44. The apparatus of any one of claims 39 to 43, wherein the first indication information is carried in at least one of the following signaling: downlink control information (DCI), radio resource control (RRC) signaling, a medium access control control element (MAC CE), or system information.

45. The apparatus of any one of claims 39 to 44, wherein the first indication information is carried in at least one of the following signals or channels: a PDCCH, a physical downlink shared channel (PDSCH), a PBCH, an SSB, a CSI-RS, or a positioning reference signal (PRS).

46. The apparatus of any one of claims 38 to 45, wherein
the processing module is configured to start the first timer and/or send the first prompt information upon occurrence of the first event; or
the processing module is configured to start the first timer and/or send the first prompt information upon occurrence of the first event and elapse of a first duration; or
the processing module is configured to start the first timer and/or send the first prompt information before the first event occurs.

47. The apparatus of claim 46, wherein starting the first timer and/or sending the first prompt information upon the occurrence of the first event comprises at least one of:
starting the first timer and/or sending the first prompt information upon a first measurement result corresponding to a first reference signal being less than a first threshold;
starting the first timer and/or sending the first prompt information upon determination of RLF;
starting the first timer and/or sending the first prompt information upon determination of beam failure;
starting the first timer and/or sending the first prompt information upon a condition for initiating conditional handover being satisfied;
starting the first timer and/or sending the first prompt information upon reception of first indication information, wherein the first indication information is used for determining the first event; or
starting the first timer and/or sending the first prompt information upon not receiving a target channel or a target signal;
wherein the target channel or the target signal comprises at least one of: the first reference signal, a first PDCCH, a PBCH, a paging channel, and the first indication information.

48. The apparatus of claim 46, wherein starting the first timer and/or sending the first prompt information upon occurrence of the first event and elapse of the first duration comprises at least one of:
starting the first timer and/or sending the first prompt information upon a first measurement result corresponding to a first reference signal being less than a first threshold and elapse of the first duration;
starting the first timer and/or sending the first prompt information upon determination of RLF and elapse of the first duration;
starting the first timer and/or sending the first prompt information upon determination of beam failure and elapse of the first duration;
starting the first timer and/or sending the first prompt information upon a condition for initiating conditional handover being satisfied and elapse of the first duration;
starting the first timer and/or sending the first prompt information upon reception of first indication information and elapse of the first duration, wherein the first indication information is used for determining the first event; or
starting the first timer and/or sending the first prompt information upon not receiving a target channel or a target signal and elapse of the first duration;
wherein the target channel or the target signal comprises at least one of: the first reference signal, a first PDCCH, a PBCH, a paging channel, or the first indication information.

49. The apparatus of claim 46, wherein starting the first timer and/or sending the first prompt information before the first event occurs comprises at least one of:
starting the first timer and/or sending the first prompt information before RLF is determined;
starting the first timer and/or sending the first prompt information before beam failure is determined;
starting the first timer and/or sending the first prompt information before a BFRQ is initiated; or
starting the first timer and/or sending the first prompt information before conditional handover is initiated.

50. The apparatus of any one of claims 46 to 49, wherein the first duration is configured, predefined, or pre-configured by a network device, or is determined by the terminal device.

51. The apparatus of any one of claims 38 to 50, further comprising:
a receiving module configured to receive first configuration information sent by a network device, wherein the first configuration information is used for configuring at least one of: the first timer, a start time of the first timer, a valid duration of the first timer, the first event, a first threshold, a first reference signal, a measurement metric corresponding to a first measurement result, or a first duration.

52. The apparatus of any one of claims 38 to 51, wherein starting the first timer and/or sending the first prompt information based on the first event comprises:
starting the first timer based on the first event, and sending the first prompt information within a valid duration of the first timer.

53. The apparatus of any one of claims 38 to 52, wherein the processing module is further configured to start a second timer upon expiry of the first timer.

54. The apparatus of claim 53, wherein the processing module is further configured to, within a valid duration of the first timer, restrain from performing at least one of: downlink reception, downlink measurement, or uplink transmission.

55. The apparatus of claim 53 or 54, wherein the processing module is further configured to, within a valid duration of the second timer, perform at least one of: downlink reception, downlink measurement, or uplink transmission.

56. The apparatus of any one of claims 53 to 55, wherein the receiving module is further configured to receive second configuration information sent by a network device, wherein the second configuration information is used for configuring at least one of: the second timer, a start time of the second timer, or a valid duration of the second timer.

57. The apparatus of any one of claims 38 to 52, wherein the processing module is further configured to, within a valid duration of the first timer, perform at least one of: downlink reception, downlink measurement, or uplink transmission.

58. The apparatus of any one of claims 38 to 57, wherein a number of times that the terminal device starts the first timer is less than or equal to a second threshold, or a number of times that the terminal device starts the first timer within a second duration is less than or equal to the second threshold.

59. The apparatus of claim 58, wherein the second threshold is configured, predefined, or pre-configured by a network device, or is determined by the terminal device.

60. The apparatus of claim 58 or 59, wherein the second duration is configured, predefined, or pre-configured by a network device, or is determined by the terminal device.

61. The apparatus of any one of claims 38 to 60, further comprising:
a sending module configured to send second indication information to a network device, wherein the second indication information is used for reporting at least one of the following: the terminal device has a capability to send the first prompt information, a first duration, a second duration, a first threshold, or a second threshold.

62. The apparatus of any one of claims 38 to 61, wherein the first prompt information is used for alerting a user to improve the communication quality of the terminal device.

63. An apparatus for wireless communication, disposed in a network device and comprising:
a sending module configured to send first configuration information to a terminal device, wherein the first configuration information is used for configuring the terminal device to start a first timer and/or send first prompt information based on a first event, and the first event is related to communication quality of the terminal device.

64. The apparatus of claim 63, wherein the first event comprises at least one of the following:
a first measurement result corresponding to a first reference signal is less than a first threshold;
radio link failure (RLF);
beam failure;
new beam identification (NBI);
a beam failure recovery request (BFRQ);
conditional handover;
the first reference signal is not received;
a first physical downlink control channel (PDCCH) is not received;
a physical broadcast channel (PBCH) is not received;
a paging channel is not received;
first indication information is received, wherein the first indication information is used for determining the first event; or
the first indication information is not received.

65. The apparatus of claim 64, wherein the first reference signal comprises at least one of: a synchronizing signal/PBCH block (SSB), a channel state information-reference signal (CSI-RS), or a synchronization signal.

66. The apparatus of claim 64 or 65, wherein a measurement metric corresponding to the first measurement result comprises at least one of: a hypothetical PDCCH block error rate (BLER), reference signal received power (RSRP), reference signal received quality (RSRQ), or a signal-to-interference-plus-noise ratio (SINR).

67. The apparatus of any one of claims 64 to 66, wherein the first threshold is configured, predefined, or pre-configured by the network device, or is determined by the terminal device.

68. The apparatus of any one of claims 64 to 67, wherein the first indication information being used for determining the first event comprises that:
the first indication information indicates the first event; or
the first indication information is used for configuring the first event.

69. The apparatus of any one of claims 64 to 68, wherein the first indication information is carried in at least one of the following signaling: downlink control information (DCI), radio resource control (RRC) signaling, a medium access control control element (MAC CE), or system information.

70. The apparatus of any one of claims 64 to 68, wherein the first indication information is carried in at least one of the following signals or channels: a PDCCH, a physical downlink shared channel (PDSCH), a PBCH, an SSB, a CSI-RS, or a positioning reference signal (PRS).

71. The apparatus of any one of claims 64 to 70, wherein the first configuration information is used for configuring at least one of: the first timer, a start time of the first timer, a valid duration of the first timer, the first event, a first threshold, a first reference signal, a measurement metric corresponding to a first measurement result, or a first duration.

72. The apparatus of any one of claims 63 to 71, wherein the sending module is further configured to send second configuration information to the terminal device, wherein the second configuration information is used for configuring at least one of: a second timer, a start time of the second timer, or a valid duration of the second timer, wherein the second timer is started upon expiry of the first timer.

73. The apparatus of any one of claims 63 to 72, further comprising:
a receiving module configured to receive second indication information sent by the terminal device, wherein the second indication information is used for reporting at least one of the following: the terminal device has a capability to send the first prompt information, a first duration, a second duration, a first threshold, or a second threshold, wherein the first duration is related to a start time of the first timer, the second duration is related to a number of times that the terminal device starts the first timer, and the second threshold is related to the number of times that the terminal device starts the first timer.

74. The apparatus of any one of claims 63 to 73, wherein the first prompt information is used for alerting a user to improve the communication quality of the terminal device.

75. A communication device, comprising:
a memory configured to store a computer program; and
a processor configured to execute the computer program to implement the method of any one of claims 1 to 25 or to implement the method of any one of claims 26 to 37.

76. A computer-readable storage medium configured to store a computer program which, when executed by a processor, causes the processor to implement the method of any one of claims 1 to 25 or to implement the method of any one of claims 26 to 37.

77. A chip comprising programmable logic circuits and/or program instructions which, when executed on the chip, cause the chip to implement the method of any one of claims 1 to 25 or to implement the method of any one of claims 26 to 37.

78. A computer program product, wherein the computer program product comprises computer instructions that are stored in a computer-readable storage medium, and a processor is configured to read the computer instructions stored in the computer-readable storage medium and execute the computer instructions to implement the method of any one of claims 1 to 25 or to implement the method of any one of claims 26 to 37.
